# EUROPEAN PATENT SPECIFICATION

(11) **EP 3 750 740 B1**
(45) Date of publication and mention of the grant of the patent: **14.08.2024**
(21) Application number: 19750329.5
(22) Date of filing: 22.01.2019
(51) Int. Cl.: B60K 35/29, B62J 50/22

(54) **INFORMATION PRESENTATION ASSISTANCE DEVICE FOR STRADDLED VEHICLE, AND INFORMATION PRESENTATION ASSISTANCE SYSTEM FOR STRADDLED VEHICLE**
HILFSVORRICHTUNG ZUR INFORMATIONSDARSTELLUNG FÜR GRÄTSCHSITZFAHRZEUG UND HILFSSYSTEM ZUR INFORMATIONSDARSTELLUNG FÜR GRÄTSCHSITZFAHRZEUG
DISPOSITIF D'AIDE À LA PRÉSENTATION D'INFORMATIONS POUR VÉHICULE À ENFOURCHER ET SYSTÈME D'AIDE À LA PRÉSENTATION D'INFORMATIONS POUR VÉHICULE À ENFOURCHER

(30) Priority: 08.02.2018 JP 2018020914
(43) Date of publication of application: 16.12.2020
(73) Proprietor: YAMAHA HATSUDOKI KABUSHIKI KAISHA, Iwata-shi, Shizuoka 438-8501 (JP)
(72) Inventor: TAKAHASHI, Go, Iwata-shi, Shizuoka 438-8501 (JP); MAEKAWA, Koji, Iwata-shi, Shizuoka 438-8501 (JP); SHIBUYA, Hiroshi, Iwata-shi, Shizuoka 438-8501 (JP); TAKEUCHI, Tomohiro, Iwata-shi, Shizuoka 438-8501 (JP)
(74) Representative: Stöckeler, Ferdinand
(86) International application number: PCT/JP2019/001815
(87) International publication number: WO 2019/155864

(56) References cited:
- JP-A- 2006 205 930
- JP-A- 2006 205 930
- JP-A- 2017 056 830
- JP-A- 2017 056 830
- US-A1- 2017 334 500

## Description

### Technical Field

The present invention relates to an information presentation assist device for a straddled vehicle, and an information presentation system for a straddled vehicle.

### Background Art

Conventionally proposed is a motorcycle with a meter having a compact arrangement of display areas for various types of information (see, for example, Patent Literature 1, hereinafter PTL 1). Also proposed is a motorcycle capable of changing display of various types of information given to a rider (see, for example, Patent Literature 2, hereinafter PTL 2).

US 2017/334500 A1 discloses systems to present information to recreational vehicle riders and to provide customizable visual information to recreational vehicle riders, to connect and transmit audio information between a driver portable communication device and a driver audio interface device through the recreational vehicle and audio information between a passenger portable communication device and a passenger audio interface device.

JP 2017 056830 A discloses an information providing device for a vehicle, which comprises a first in-vehicle appliance comprising a first information display part and a second information display part, which are configured to display various states of the vehicle. A control means is provided to display content on the first or second information display part dependent on a prescribed condition.

JP 2006 205930 A discloses an image display device provided with a display means having an eye-contact optical system arranged at a front of at least any one of eyes of a user, wherein the form of an operation assistance image information displayed on the display means is controlled according to a traveling state of a vehicle driven by the user.

### Citation List

### Patent Literature

PTL 1: Japanese Patent Application Laid-Open No. 2012-013452
PTL 2 : Japanese Patent Application Laid-Open No. 2017-061172

### Summary of Invention

### Technical Problem

In a straddled vehicle as exemplified by a motorcycle, effectively giving a rider more pieces of information is demanded.

The present invention aims to provide an information presentation assist device for a straddled vehicle, and an information presentation system for a straddled vehicle, the device and system being capable of effectively giving a rider more pieces of information.

### Solution to Problem

In a straddled vehicle, various types of output information are presented to a rider. For example, a vehicle speed, a residual fuel amount, an engine rotation speed, and the like, are displayed at respective predetermined positions in a meter (instrument panel). An abnormality in oil pressure, an abnormality in a brake and the like, are outputted in the form of lighting of corresponding lamps disposed in the meter. Music, a navigation voice and the like, are outputted through a speaker provided in a vehicle body. Like this, the device that receives output information in a straddled vehicle is normally specified for each output information.

Recent years have seen the development of a sensing technology and a communications technology such as Internet, which enables people who are outdoors to acquire much information even while they are moving. This applies to a rider of a straddled vehicle, too. Giving the rider much output information is demanded. Giving much output information can enhance convenience, and can attract increasing interest in the straddled vehicle and in driving the straddled vehicle, for example. For the purpose of giving more pieces of output information, the inventors of the present invention considered increasing the number of devices that receive output information.

A straddled vehicle is configured to use the rider's weight shifting to travel and/or turn. In traveling, the attitude of the straddled vehicle is controlled by the rider shifting his/her weight. The size (especially the vehicle width) of the straddled vehicle is smaller than that of an ordinary four-wheeled automobile or the like. Thus, an installation space for devices that receive output information is limited. This is why increasing the number of devices that receive output information in accordance with an increase of the output information is physically difficult.

The rider of the straddled vehicle needs to shift his/her weight for the attitude control at a time of traveling and/or turning. A driver of an ordinary four-wheeled automobile or the like does not need to shift his/her weight for the attitude control. While driving the straddled vehicle, therefore, the rider has to spend more processing resources of his/her brain in steering the straddled vehicle, as compared to a driver of an ordinary four-wheeled automobile or the like. This reduces a margin in processing resources of the rider's brain while the rider is driving the straddled vehicle. For example, when much output information is presented, the effective field-of-view of the rider who is driving the straddled vehicle may possibly be influenced by recognition of the output information, unlike a driver of an ordinary four-wheeled automobile or the like.

The straddled vehicle is different from an ordinary four-wheeled automobile, in terms of physical constraints on the installation space for devices as well as a margin in the brain processing resources. Thus, obtaining a wide installation space for devices in order to enable the rider to quickly recognize output information is difficult in the straddled vehicle. As a result, when two or more pieces of output information are concurrently presented to the rider, a situation may occur in which presenting some of the output information at a position easily recognizable cannot prevent presenting other output information at a position less easily recognizable. In this situation, it can be likely that the first output information attracts attention of the rider, which makes recognition of the other output information less apparent. Another situation is also conceivable, in which presentation of first output information is started while second output information is being presented at a position more easily recognizable. In this situation, it can be likely that the rider pays and keeps paying attention to the second output information, which consequently makes recognition of the first output information difficult. In the straddled vehicle, the smallness of the margin given to the rider is considered an issue, especially when two or more pieces of output information are presented in a manner temporally overlapping one another.

The present invention adopts the following configuration.
(1) An information presentation assist device for a straddled vehicle, the information presentation assist device for a straddled vehicle including:
   an effective presentation element information acquisition section that acquires pieces of effective presentation element information related to two or more information presentation elements that are provided in the straddled vehicle or in an accessory belonging to a rider of the straddled vehicle and that are in an available state;
   a classification information acquisition section that acquires pieces of classification information related to types of output information;
   a selection section that, in a case of presenting the two or more pieces of output information in a temporally overlapping manner, selects at least one information presentation element that is to present each of the two or more pieces of output information from the two or more information presentation elements that are in the available state, the selection being made at least based on a relationship among the two or more pieces of classification information corresponding to the two or more pieces of output information; and
   a presentation command output section that outputs a presentation command for causing each of the two or more pieces of output information to be presented via the information presentation element selected by the selection section.

In the configuration of (1), to present two or more pieces of output information in a temporally overlapping manner, information presentation elements serving as output destinations of the two or more pieces of output information are set based on a relationship among pieces of classification information corresponding to the two or more pieces of output information. A combination of the two or more pieces of output information to be presented in a temporally overlapping manner changes while the straddled vehicle is traveling. Each time the combination of the two or more pieces of output information changes, the relationship among pieces of classification information changes accordingly. Thus, information presentation element, which serves as an output destination of each piece of output information, is not fixedly associated with a type of the piece of output information, but it can change in accordance with the relationship among pieces of classification information. It is therefore not necessary that an information presentation element is provided in association with a type of each piece of output information that may potentially be presented while traveling. Accordingly, the configuration of (1) enables types of output information, the number of which is greater than the number of information presentation elements, to be accepted as output information that can be presented to the rider while traveling. Thus, more pieces of output information can be given to the rider even though the straddled vehicle has physical constraints on an installation space for the information presentation elements.

While the combination of two or more pieces of output information is changing while traveling, the selection section can select information presentation elements that are to present the respective pieces of output information such that, for example, a piece of output information belonging to a classification assigned as a high priority can be presented via an information presentation element assigned as a high priority, based on the relationship among pieces of classification information included in the combination at that time. More specifically, for example, a piece of output information belonging to a classification more interesting to the rider can be presented in a manner more easily recognizable for the rider. Accordingly, effective presentation of the output information can be achieved.

In the configuration of (1) described above, the information presentation assist device for a straddled vehicle performs integrated control on two or more pieces of output information being presented via two or more information presentation elements. Accordingly, more pieces of information can be given to the rider effectively.

The present invention may adopt the following configuration.

(2) The information presentation assist device for a straddled vehicle according to (1),
the information presentation assist device for a straddled vehicle further including a first data storage section that stores first data indicating a correspondence relationship between the pieces of classification information and first parameters that are set for the respective pieces of classification information, wherein
the selection section specifies the relationship among the two or more pieces of classification information by mutually comparing the first parameters set for the respective pieces of classification information.

In the configuration of (2), the first parameter is set for each piece of classification information. The first parameter is a parameter used to specify the priority of a piece of classification information. Adoption of the first parameter makes it possible to accept and present a new piece of output information. For example, in order for the information presentation assist device for a straddled vehicle to present the new piece of output information, it is sufficient to give or set a first parameter to a piece of classification information corresponding to the new piece of output information. This allows the selection section to specify a relationship between the piece of classification information corresponding to the new piece of output information and other pieces of classification information, by comparing them. Consequently, the selection section can select an information presentation element that is to present the new piece of output information, based on the specified relationship among two or more pieces of classification information. In this manner, the new piece of output information that has not ever been presented can be presented. Accordingly, offerable output information can be increased. More pieces of information can be given to the rider effectively.

(3) The information presentation assist device for a straddled vehicle according to (1) or (2),
the information presentation assist device for a straddled vehicle further including a second data storage section that stores second data indicating a correspondence relationship between the information presentation elements and second parameters that are set for the respective information presentation elements, wherein
the selection section selects at least one information presentation element that is to present each of the two or more pieces of output information, at least based on the relationship among the two or more pieces of classification information corresponding to the two or more pieces of output information and the second parameter.

In the configuration of (3), the second parameter is set for each piece of information presentation element. The second parameter is a parameter used to specify the priority of an information presentation element. Adoption of the second parameter makes it possible that a new device functions as an information presentation element. For example, in order for the new device to function as an information presentation element, it is sufficient to assign a second parameter to the new device, too. This allows the selection section to select the new information presentation element as an element that is to present a piece of output information, based on the relationship among two or more pieces of classification information, and the second parameters assigned to the new information presentation element and to the other information presentation elements. Consequently, a device included in an add-on optional component or in an accessory belonging to the rider can function as an information presentation element. As mentioned above, the straddled vehicle suffers from physical constraints on the installation space for devices, which is a problem peculiar to straddled vehicles. Enabling a device included in an optional component or in an accessory belonging to the rider to function as an information presentation element makes it possible to effectively give more pieces of information to the rider while addressing the physical constraints on the installation space for devices in a manner that is a preference of the rider.

(4) The information presentation assist device for a straddled vehicle according to any one of (1) to (3), wherein
the selection section selects at least one information presentation element that is to present each of the two or more pieces of output information, the selection being made for each of the two or more pieces of output information at least based on the relationship among the two or more pieces of classification information corresponding to the two or more pieces of output information and a rider recognition time, the rider recognition time being a time taken from when each of the information presentation elements starts presenting the piece of output information to when the rider recognizes the piece of output information.

In the configuration of (4), while a combination of two or more pieces of output information is changing during traveling, the selection section can select information presentation elements that are to present the respective pieces of output information such that, for example, a piece of output information belonging to a classification more interesting to the rider can be presented via an information presentation element having a shorter rider recognition time, based on the relationship among pieces of classification information included in the combination at that time and the rider recognition time. The selection section can also select the information presentation elements such that, for example, a piece of output information belonging to a classification less interesting to the rider can be presented via an information presentation element having a longer rider recognition time. In the straddled vehicle, a margin in processing resources of the rider's brain is likely to be reduced as mentioned above, and therefore selecting an information presentation element that is to present a piece of output information based on the rider recognition time can contribute to more effective presentation of output information.

(5) The information presentation assist device for a straddled vehicle according to (4),
the information presentation assist device for a straddled vehicle further including a driving state information acquisition section that acquires driving state information related to a driving state of the straddled vehicle driven by the rider, wherein
the selection section selects at least one information presentation element that is to present each of the two or more pieces of output information, the selection being made for each of the two or more pieces of output information at least based on the relationship among the two or more pieces of classification information corresponding to the two or more pieces of output information, the rider recognition time, and the driving state information acquired by the driving state information acquisition section.

When, for example, the straddled vehicle is traveling at a high speed or leaning into turns, many of processing resources of the rider's brain are used for a driving operation such as an attitude control, and therefore a margin in the processing resources of the rider's brain is likely to be reduced. When the rider is excited or having a decreased concentration, processing resources themselves of the rider's brain are reduced, and therefore a margin in the processing resources of the rider's brain is likely to be reduced. In the configuration of (5), the selection section can select an information presentation element for each piece of output information such that, for example, a piece of output information belonging to a classification relatively less interesting to the rider among the two or more pieces of output information cannot be presented via an information presentation element having a short rider recognition time under a driving state where a margin in processing resources of the rider's brain is small.

(6) The information presentation assist device for a straddled vehicle according to any one of (1) to (3),
the information presentation assist device for a straddled vehicle further including a driving state information acquisition section that acquires driving state information related to a driving state of the straddled vehicle driven by the rider, wherein
the selection section selects at least one information presentation element that is to present each of the two or more pieces of output information, the selection being made for each of the two or more pieces of output information at least based on the relationship among the two or more pieces of classification information corresponding to the two or more pieces of output information and the driving state information acquired by the driving state information acquisition section.

In the configuration of (6), the selection section can select an information presentation element for each piece of output information such that, for example, a piece of output information belonging to a classification relatively less interesting to the rider among the two or more pieces of output information cannot be presented under a driving state where a margin in processing resources of the rider's brain is small.

(7) The information presentation assist device for a straddled vehicle according to any one of (1) to (6), wherein
the two or more information presentation elements include at least two display parts that display pieces of output information at different display positions to each other.

In the information presentation assist device for a straddled vehicle of (7), to cause two or more different pieces of output information to be presented in a temporally overlapping manner via at least two display parts, respectively, information presentation elements serving as output destinations of the pieces of output information are determined based on the relationship among pieces of classification information corresponding to the two or more pieces of output information. The at least two display parts are provided so as to display the pieces of output information at different positions to each other. It is therefore possible to select an information presentation element that is to present each piece of output information such that, for example, a piece of output information belonging to a classification more interesting to the rider can be displayed via the display part having a position more easily recognizable. Accordingly, effective presentation of the output information can be achieved while a combination of two or more pieces of output information to be presented in a temporally overlapping manner is changing during traveling.

(8) The information presentation assist device for a straddled vehicle according to any one of (1) to (7),
the information presentation assist device for a straddled vehicle further including:
an output information acquisition section that acquires the pieces of output information; and
an information presentation control section that causes each of the two or more pieces of output information to be presented via the information presentation element selected by the selection section, based on the presentation command given from the presentation command output section.

In the configuration of (8), the output information acquisition section acquires two or more pieces of output information to be presented in a temporally overlapping manner. The information presentation control section causes each of the two or more pieces of output information to be presented via the information presentation element selected by the selection section, based on the presentation command. In the configuration of (8), the information presentation assist device for a straddled vehicle inputs and outputs output information itself, and more pieces of information can be given to the rider effectively.

(9) An information presentation system for a straddled vehicle,
the information presentation system for a straddled vehicle including:
the information presentation assist device according to (8), provided in the straddled vehicle; and
the two or more information presentation elements provided in the straddled vehicle or in the accessory.

The information presentation system for a straddled vehicle of (9) can effectively give the rider more pieces of information.

(10) An information presentation system for a straddled vehicle,
the information presentation system for a straddled vehicle including:
the information presentation assist device according to any one of (1) to (7), provided at a position not in the straddled vehicle nor in the accessory;
an information presentation control section provided in the straddled vehicle or in the accessory, the information presentation control section causing each of the two or more pieces of output information to be presented via the information presentation element selected by the selection section, based on the presentation command given from the presentation command output section; and
the two or more information presentation elements provided in the straddled vehicle or in the accessory.

The information presentation system for a straddled vehicle of (10) can effectively give the rider more pieces of information.

An information presentation assist device for a straddled vehicle is a device that assists in presentation of output information presented via two or more information presentation elements that are provided in the straddled vehicle or in an accessory belonging to a rider of the straddled vehicle. The information presentation assist device for a straddled vehicle assists in the presentation of output information by outputting a presentation command to an information presentation control section. Based on the presentation command, the information presentation control section controls presentation of the output information presented via two or more information presentation elements.

The information presentation assist device for a straddled vehicle may include an information presentation control section. In such a case, the information presentation assist device for a straddled vehicle is an electronic control unit (ECU) provided in the straddled vehicle, for example. An information presentation system for a straddled vehicle includes, for example, the information presentation assist device for a straddled vehicle provided in the straddled vehicle, and two or more information presentation elements provided in the straddled vehicle or in the accessory belonging to the rider. In the straddled vehicle, the information presentation assist device for a straddled vehicle generates a presentation command, and controls presentation of output information presented via two or more information presentation elements based on the presentation command. This example will be described in the first and third embodiments.

The information presentation assist device for a straddled vehicle may not always need to include the information presentation control section. In such a case, the information presentation control section is provided in a different device separate from the information presentation assist device for a straddled vehicle. The information presentation assist device for a straddled vehicle is an external server, for example. The different device is the ECU provided in the straddled vehicle, for example. The information presentation system for a straddled vehicle includes, for example, the information presentation assist device for a straddled vehicle (external server) provided at a position not in the straddled vehicle nor in the accessory, the information presentation control section provided in the straddled vehicle or in the accessory, and two or more information presentation elements provided in the straddled vehicle or in the accessory. To be specific, for example, the external server outputs a presentation command to the ECU. The ECU controls the presentation of output information presented via the two or more information presentation elements based on the presentation command. This example will be described in the second and fourth embodiments.

When the external server and the straddled vehicle are capable of communication with each other, or when the external server, the accessory belonging to the rider and the straddled vehicle are capable of communication with each other, respective sections of the information presentation assist device for a straddled vehicle may be provided either in the external server or in the straddled vehicle or in an accessory. That is, the effective presentation element information acquisition section may be provided either in the external server or in the straddled vehicle or in an accessory. The classification information acquisition section may be provided either in the external server or in the straddled vehicle or in an accessory. The selection section may be provided either in the external server or in the straddled vehicle or in an accessory. The presentation command output section may be provided either in the external server or in the straddled vehicle or in an accessory. The first data storage section may be provided either in the external server or in the straddled vehicle or in an accessory. The second data storage section may be provided either in the external server or in the straddled vehicle or in an accessory. The output information acquisition section may be provided either in the external server or in the straddled vehicle or in an accessory. The information presentation control section may be provided either in the external server or in the straddled vehicle or in an accessory. The driving state information acquisition section may be provided either in the external server or in the straddled vehicle or in an accessory.

The straddled vehicle refers to a type of a vehicle having a saddle where a rider sits astraddle. The straddled vehicle is configured to use rider's weight shifting to travel and/or turn. The straddled vehicle includes a handle bar to be gripped by the rider. In traveling and/or turning, the rider shifts his/her weight while gripping the handle bar with his/her both hands, for controlling the attitude of the straddled vehicle. Examples of the straddled vehicle include, but are not particularly limited to a motorcycle, a motor tricycle, an all-terrain vehicle (ATV), a snowmobile, and the like.

The accessory belonging to the rider of the straddled vehicle refers to a device worn or carried along with the rider who is riding on the straddled vehicle, the device being capable of communication and presentation of output information. The rider as used herein refers to a person who is riding on the straddled vehicle. Thus, the rider encompasses a passenger as well as a person who is driving the straddled vehicle. The passenger is a tandem rider, for example. Examples of the accessory include, but are not particularly limited to an HMD, an Incom (headset), shoes, gloves, a helmet, a wear, a smartphone, an electronic key, an earphone, and a bone-conduction earphone.

The information presentation element is configured to present output information. Presentation of output information is performed visually or auditorily, for example. Presentation of output information is not limited thereto, and may be performed by, for example, communication using a tactile sensation (cutaneous sensation) or an olfactory sensation.

Examples of the information presentation element provided in the straddled vehicle or in the accessory belonging to the rider of the straddled vehicle include, but are not particularly limited to, the devices listed below. The information presentation elements listed below are configured so as to be able to receive output information and to present output information.
· meter (instrument panel) (visual presentation of output information)
· HMD (Head-Mounted Display) (visual presentation of output information)
· screen edge (visual presentation of output information using light or the like)
· speaker (auditory presentation of output information)
· buzzer (auditory presentation of output information)
· incom (headset) (auditory presentation of output information)
· mirror (visual presentation of output information using light or the like)
· flasher (visual presentation of output information)
· taillight (visual presentation of output information)
· seat (tactile presentation of output information using vibration)
· road surface radiation light (visual presentation of output information)
· shoes (tactile presentation of output information using vibration)
· gloves (tactile presentation of output information using vibration)
· handle lever (tactile presentation of output information using reaction force against operation)
· accelerator throttle (tactile presentation of output information using reaction force against operation)
· roadside display (visual presentation of output information)
· step (tactile presentation of output information using vibration)
· grip (tactile presentation of output information using vibration)
· helmet exterior (visual presentation of output information)
· wear (tactile presentation of output information using vibration)
· HUD (Head-Up Display) combiner (visual presentation of output information)
· HUD screen (visual presentation of output information)
· smartphone (visual or auditory presentation of output information)
· grab bar (tactile presentation of output information using vibration)
· helmet interior (tactile presentation of output information using vibration, or olfactory presentation of output information using fragrance)
· electronic key (tactile presentation of output information using vibration)
· earphone (auditory presentation of output information)
· bone-conduction earphone (auditory presentation of output information)
· pressure application projection (tactile presentation of output information)
· warm/cold pad (tactile presentation of output information)

In a case where a single display has two or more display areas capable of displaying output information, each of the display areas serves as an information presentation element. In this case, the single display includes two or more information presentation elements. The pressure application projection, which is capable of moving or expanding/contracting like a pressure application projection provided in an ordinary massage machine, presents output information to the rider using its operation. The pressure application projection is provided at a position in the straddled vehicle, the position being touched by the rider. Examples of the position touched by the rider include, but are not particularly limited to, a seat and a grip. The warm/cold pad, which is capable of at least one of temperature rise or temperature drop, presents output information to the rider using a temperature change. The warm/cold pad is provided at a position in the straddled vehicle or in the accessory belonging to the rider, the position being a position that allows the temperature change to be communicated to the rider. In a specific example, the warm/cold pad is provided in a grip or in a wearable device. The warm/cold pad may have a heater, a Peltier device, or the like, for example.

The output information refers to information to be presented to the rider. The output information may be either verbal information or nonverbal information. An information source of the output information may be located either inside the straddled vehicle or outside the straddled vehicle. Examples of the information source of the output information include, but are not particularly limited to, an on-vehicle navigation device, a portable phone, a satellite positioning system such as GPS, Internet, various types of sensors included in the straddled vehicle, an integrated traffic control system such as C-ITS, and the like. Examples of contents of the output information include, but are not particularly limited to, information related to a state of the straddled vehicle, information related to a state of the rider, and information related to a situation of environment surrounding the straddled vehicle. Display and sound for navigation, and an audio system also correspond to the output information. The output information may be altered after it is acquired from an information source and before it is presented via an information presentation element. Two or more pieces of output information acquired from two or more information sources may be used to generate a single piece of output information. Such alteration or generation of output information is not particularly limited. Specific examples of the output information include an engine rotation speed, a vehicle speed, a residual fuel amount, an incoming call display of a portable phone, various types of alerts during traveling, a guidance for maintenance, and the like. Other specific examples of the output information include a guidance for a gear-shift operation timing, a guidance for a temporary stop operation, a turn-by-turn navigation, an odometer, a tire power, a gear stage, a speed limit, a map, an instantaneous fuel efficiency, various types of icons, various types of indicators, a message in a messaging application, a function setting, a mean fuel efficiency, vehicle information, a drive log, and the like. More specific examples of the output information include a lane departure warning, a blind spot warning, an earthquake early warning, a road surface condition, an emergency vehicle warning, a coolant temperature warning, an engine warning, a tire pressure, a residual fuel amount warning, a neutral position, a trip meter, and the like.

The available state means a state where presentation of output information is allowed. An information presentation element being in the available state means the information presentation element being capable of receiving output information from the outside of the information presentation element, capable of accepting the received output information, and capable of presenting the accepted output information. Here, one of conventional straddled vehicles will be discussed as an example. In a conventional straddled vehicle, once wireless communication connection is established with an earphone which is an accessory belonging to a rider under a situation where a vehicle body speaker is in the available state, an output destination of output information is switched from the vehicle body speaker to the earphone. After that, the output information is no longer supplied to the vehicle body speaker, but is supplied to the earphone. At this time, the vehicle body speaker is no longer in the available state.

The effective presentation element information means information used to specify two or more information presentation elements that are provided in a straddled vehicle or in an accessory belonging to a rider of the straddled vehicle and that are in the available state. The effective presentation element information may be pieces of information each assigned to each information presentation element. When, for example, a single display that is provided in the straddled vehicle and that is in the available state has two or more information presentation elements, information allowing a terminal of the display to be specified can serve as the effective presentation element information. By acquiring the information for specifying the terminal of the display, it can be specified that two or more information presentation elements are in the available state.

A type of output information is specified based on contents of the output information, for example. Setting of a type of output information is not particularly limited. For example, pieces of output information, "engine rotation speed" and "vehicle speed", may either belong to different types, "engine rotation speed" and "vehicle speed", or belong to the same type, "vehicle information".

The classification information is information allowing a type of output information to be specified. The classification information may be either contained in or attached to the output information, or generated by the classification information acquisition section. In other words, the classification information acquisition section may be configured to read output information and generate classification information based on a result of the reading, to acquire classification information.

Presentation in a temporally overlapping manner means presenting two or more pieces of output information such that there is a period in which the two or more pieces of output information are concurrently presented. The situations listed below correspond to presenting two or more pieces of output information in a temporally overlapping manner;
two or more pieces of output information start being presented concurrently; and
one of two or more pieces of output information starts being presented while the other of the two or more pieces of output information is being presented.

The first parameter refers to a parameter used to specify the priority of classification information. The first parameter is set for each piece of classification information. Comparing first parameters set for two or more pieces of classification information against one another enables priorities of the respective pieces of classification information to be specified. For example, suppose that it is set that a first parameter is smaller for a higher priority level. In this case, when first parameters 1, 2, and 3 are set for pieces of classification information A, B, and C, respectively, the descending order of priorities is A, B, and C. A correspondence relationship between the first parameter and the classification information is not particularly limited. The correspondence relationship may be either preset by a manufacturer or set (customized) by the rider. The correspondence relationship may be set or changed in accordance with how much the rider is interested in output information or in a classification of the output information. How much the rider is interested in output information or in a classification of the output information can be set as appropriate depending on, for example, the frequency at which the rider accesses the output information or a time period for which the rider accesses the output information. The first parameter may not always need to be set. For example, a priority may be set to each combination of pieces of classification information, instead of the first parameter.

The presentation command is a command for causing each of two or more pieces of output information to be presented via an information presentation element selected by the selection section. Based on the presentation command, the information presentation control section performs a control for causing the pieces of output information to be presented via the information presentation elements. The information presentation control section may be either included in the information presentation assist device for a straddled vehicle (for example, the ECU) mounted on the straddled vehicle, or provided in an external server.

The second parameter is a parameter used to specify the priority of an information presentation element. The second parameter is set for each information presentation element. Comparing second parameters set for two or more information presentation elements against one another enables priorities of the respective information presentation elements to be specified. For example, suppose that it is set that a second parameter is smaller for a priority level that is higher. In this case, when second parameters 1, 2, and 3 are set for information presentation elements a, b, and c, respectively, the descending order of priorities is a, b, and c. A correspondence relationship between the second parameter and the information presentation element is not particularly limited. The correspondence relationship may be either preset by a manufacturer or set (customized) by the rider. The second parameter may not always need to be set. For example, a priority may be set to each combination of information presentation elements, instead of the second parameter.

The rider recognition time means a time taken from when an information presentation element starts presenting output information to when the rider recognizes the output information. The rider recognition time needs to be neither a correct time nor a specific time. The rider recognition time is an indicator of the degree to which an information presentation element allows easy recognition. The rider recognition time is preferably set such that comparing rider recognition times set for two or more information presentation elements against one another makes it possible to rank the information presentation elements in order of how easily the respective information presentation elements can be recognized. In relation to the rider recognition time, which sensation is used for recognition is not particularly limited, and may be any of visual sensation, auditory sensation, tactile sensation, or the like. The rider recognition time may be set as the second parameter.

The driving state may be either a state of the straddled vehicle or a state of the rider. Both a state of the straddled vehicle and a state of the rider may be used as the driving state. Driving state information related to a state of the straddled vehicle may be, for example, a vehicle speed, a lean angle of the vehicle, an acceleration of the vehicle, or a parameter specified based on at least one of them. Driving state information related to a state of the rider may be, for example, a heart rate, an eye direction, a rider attitude, or a parameter specified based on at least one of them.

The driving state information acquisition section is not particularly limited. The driving state information acquisition section related to a state of the straddled vehicle may be, for example, various types of sensors provided in the straddled vehicle. Examples of the various types of sensors include, but are not particularly limited to, the ones illustrated in the embodiments, which will be described later. The driving state information acquisition section related to a state of the rider may be, for example, but not particularly limited to, a heart rate sensor, an eye direction detection device, or a motion sensor. The rider's excitement, fatigue, concentration decrease, or the like is reflected in, for example, an increase in heart rate, a dispersion of the eye direction, or a change of the attitude. Thus, the sensors mentioned above can acquire driving state information related to a state of the rider. The eye direction detection device is provided in a helmet, for example. The motion sensor is provided in a helmet or in a wear such as a jacket, for example.

### Advantageous Effects of Invention

The present invention enables more pieces of information (output information) to be effectively given to a rider.

### Brief Description of Drawings

[FIG. 1] An explanatory diagram related to presentation of output information according to a first embodiment.
[FIG. 2] A side view schematically showing a straddled vehicle according to the first embodiment.
[FIG. 3] A function block diagram showing a control device which serves as an information presentation assist device for a straddled vehicle according to the first embodiment.
[FIG. 4] A block diagram showing the control device which serves as the information presentation assist device for a straddled vehicle according to the first embodiment.
[FIG. 5] A flowchart showing an effective presentation element information acquisition routine.
[FIG. 6] (a) to (d) are explanatory diagrams showing effective presentation element information acquired.
[FIG. 7] A flowchart showing a presentation command output routine.
[FIG. 8] (a) to (c) are explanatory diagrams showing classification information acquired.
[FIG. 9] An explanatory diagram for a relationship among pieces of classification information and a rider recognition time.
[FIG. 10] (a) to (c) are explanatory diagrams each showing a correspondence relationship between effective presentation element information and classification information.
[FIG. 11] A flowchart showing an output information presentation routine.
[FIG. 12] A function block diagram showing an information presentation system for a straddled vehicle according to a second embodiment.
[FIG. 13] A function block diagram showing a control device of a straddled vehicle which serves as an information presentation assist device for a straddled vehicle according to a third embodiment.
[FIG. 14] A function block diagram showing an information presentation system for a straddled vehicle according to a fourth embodiment.
[FIG. 15] A flowchart showing a presentation command output routine according to a fifth embodiment.
[FIG. 16] An explanatory diagram for a relationship among pieces of classification information and a corrected rider recognition time according to the fifth embodiment.

### Description of Embodiments

The following will describe some embodiments with reference to the drawings. The present invention is not limited to the embodiments below.

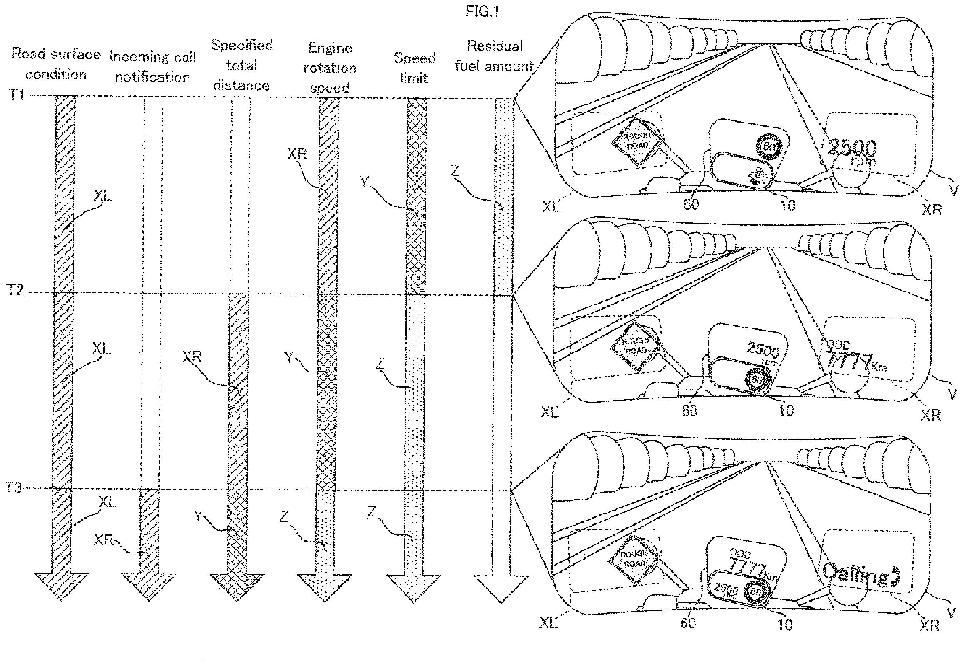

FIG. 1 is an explanatory diagram related to presentation of output information according to a first embodiment. The left part of FIG. 1 shows a time chart on pieces of output information presented to a rider. In the figure, road surface condition, incoming call notification, specified total distance, engine rotation speed, speed limit, and residual fuel amount serve as the pieces of output information. The road surface condition is information about conditions of a road surface (for example, a rough road), which is to be given to the rider. The specified total distance is a distance that is set as a milestone distance. Non-limiting examples of the specified total distance include a distance that marks renewal of the highest digit, such as 10000 km, and a distance that marks repeated digits, such as 7777 km. The speed limit is a speed limit that is set for a road where a vehicle is traveling. The speed limit may be changed depending on the weather or the like. These pieces of output information will be explained in this embodiment, but actually, more pieces of output information are presented to the rider.

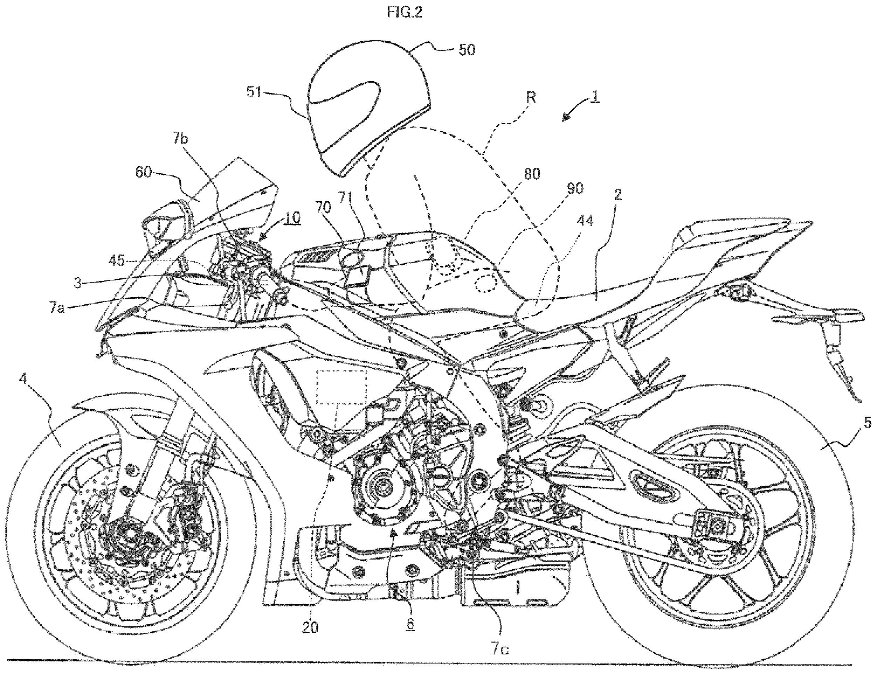

The right part of FIG. 1 shows a field-of-view V of a rider R through an HMD 51 (see FIG. 2), which is mounted to a helmet 50. In the right part, the upper section shows the field-of-view V at a time point T1. The middle section of the right part shows the field-of-view V at a time point T2. The lower section of the right part shows the field-of-view V at a time point T3. The field-of-view V includes left and right areas XL, XR of the HMD 51, a HUD screen 60, and a meter 10, each of which serves as an information presentation element.

At the time point T1, the road surface condition is presented in the left area XL, the engine rotation speed is presented in the right area XR, the speed limit is presented in the HUD screen 60, and the residual fuel amount is presented in the meter 10. These pieces of output information are presented in a temporally overlapping manner. A correspondence relationship between each piece of output information and an information presentation element that is to present the piece of output information is specified at least based on a relationship among pieces of classification information respectively corresponding to the pieces of output information. The relationship among pieces of classification information will be described later.

At the time point T2, the total travel distance reaches 7777 km. The total travel distance 7777 km corresponds to the specified total distance of this embodiment. In this embodiment, the specified total distance is a piece of output information to be presented to the rider. That is, the number of pieces of output information to be presented in a temporally overlapping manner is increased at the time point T2. The correspondence relationship between each piece of output information and an information presentation element that is to present the piece of output information is re-specified at least based on a relationship among pieces of classification information respectively corresponding to pieces of output information. As a result, the specified total distance 7777 km is presented in the right area XR of the HMD 51. Accordingly, the engine rotation speed that has been presented in the right area XR before the time point T2 is moved to the HUD screen 60. The speed limit which has been presented in the HUD screen 60 before the time point T2 is moved to the meter 10. The residual fuel amount which has been presented in the meter 10 before the time point T2 is no longer disposed in the field-of-view V, but is displayed on a wearable device 70 (see FIG. 2) of the rider R.

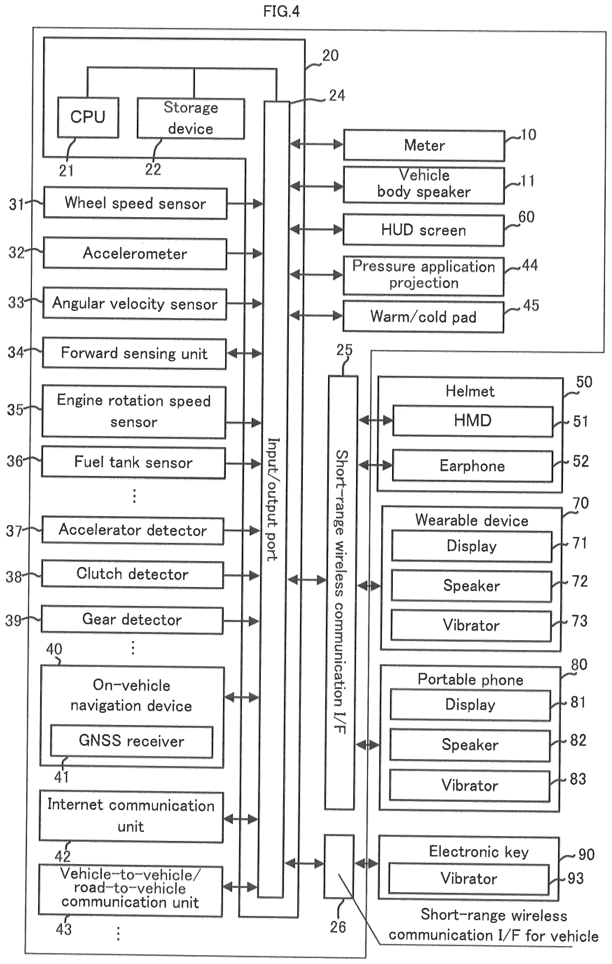

At the time point T3, a portable phone 80 (see FIG. 4), which is an accessory belonging to the rider R, receives an incoming call. In this embodiment, the incoming call notification is a piece of output information to be presented to the rider. That is, the number of pieces of output information to be presented to the rider R is increased at the time point T3. Each time pieces of output information to be presented in a temporally overlapping manner are changed, the correspondence relationship between each piece of output information and an information presentation element that is to present the piece of output information is re-specified at least based on a relationship among pieces of classification information respectively corresponding to pieces of output information. Consequently, the incoming call notification is presented in the right area XR of the HMD 51. Accordingly, the specified total distance 7777 km that has been presented in the right area XR before the time point T3 is moved to the HUD screen 60. The engine rotation speed that has been presented in the HUD screen 60 before the time point T3 is moved to the meter 10. As a result, the engine rotation speed as well as the speed limit is presented in the meter 10.

FIG. 2 is a side view schematically showing a straddled vehicle 1 according to the first embodiment. The straddled vehicle 1 is a motorcycle. The straddled vehicle 1 is caused to travel and/or turn by the rider R shifting his/her weight. The straddled vehicle 1 includes an engine 6 as a power source. The straddled vehicle 1 includes a control device 20 (ECU). The control device 20 is an example of an information presentation assist device for a straddled vehicle, which will be described later. The straddled vehicle 1 includes a seat 2, a rod-shaped handle 3 (grip) extending in a vehicle width direction, a front wheel 4, and a rear wheel 5. Disposed inside the seat 2 is a pressure application projection 44. The pressure application projection 44, which is controlled by the control device 20 and configured to expand and contract or to move, presents output information in the form of its motion. The handle 3 may be either of bar type or of separate type. The straddled vehicle 1 is configured to be driven by the rider R gripping the handle 3 with his/her both hands and shifting his/her weight. The straddled vehicle 1 includes a clutch lever 7a, an accelerator operator 7b, and a shift pedal 7c. The clutch lever 7a and the accelerator operator 7b are provided to the handle 3 so that the rider R can operate them with his/her hands. The shift pedal 7c is provided so that the rider R can operate it with his/her foot. An operation on the shift pedal 7c by the rider R is received by a multistage transmission (not shown). A warm/cold pad 45 is disposed in the handle 3. The warm/cold pad 45 is configured to present output information in the form of its temperature change. The pressure application projection 44 and the warm/cold pad 45 are examples of the information presentation element.

The straddled vehicle 1 includes the meter 10. The meter 10 is configured such that a display surface of the meter 10 entirely functions as a display screen, as shown in FIG. 1. The straddled vehicle 1 includes a vehicle body speaker 11 (see FIG. 4) disposed near the meter 10.

The straddled vehicle 1 includes the HUD screen 60. The HUD screen 60, which is not standard equipment of the straddled vehicle 1, is an optional component that is added on in accordance with the wishes of the rider R. The HUD screen 60 includes a screen having an existing configuration and a projector (not shown) that projects an image to the screen. The add-on projector constitutes the HUD screen 60. The information presentation assist device 20 for a straddled vehicle allows such an add-on HUD screen 60 to be included in integrally controlled targets for output information presentation as an information presentation element.

The rider R wears the helmet 50 with the HMD 51 on his/her head. The helmet 50 has not only the HMD 51 but also an earphone 52 (see FIG. 4). The rider R wears the wearable device 70 on his/her wrist. The wearable device 70 includes a display 71, a speaker 72 (see FIG. 4), and a vibrator 73 (see FIG. 4). The rider R carries the portable phone 80 in a pocket of his/her jacket. The portable phone 80 includes a display 81 (see FIG. 4), a speaker 82 (see FIG. 4), and a vibrator 83 (see FIG. 4). The rider R carries an electronic key 90 in a pocket of his/her trousers. The electronic key 90 includes a vibrator 93 (see FIG. 4). The helmet 50, the wearable device 70, the portable phone 80, and the electronic key 90 correspond to accessories belonging to the rider R. The earphone 52, the HMD 51, the displays 71, 81, the speakers 72, 82, and the vibrators 73, 83, 93 correspond to information presentation elements included in the accessories belonging to the rider R. While the rider R is driving the straddled vehicle 1, these accessories belonging to the rider R may or may not be worn or carried along with the rider R. The information presentation assist device 20 for a straddled vehicle allows an information presentation element included in such an accessory belonging to the rider R to be served under integrated control on output information presentation.

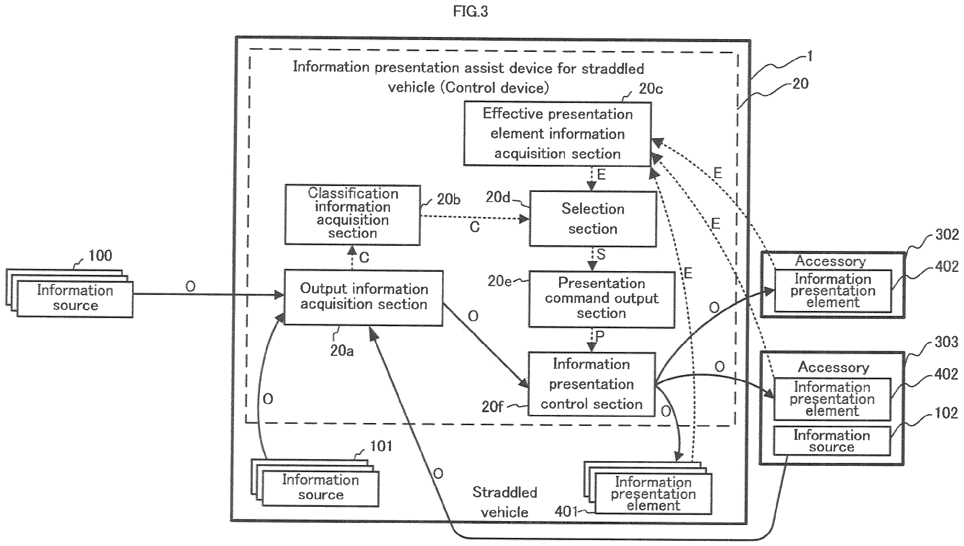

FIG. 3 is a function block diagram showing the information presentation assist device 20 for a straddled vehicle according to the first embodiment. The straddled vehicle 1 includes the information presentation assist device 20 (control device) for a straddled vehicle. The information presentation assist device 20 for a straddled vehicle includes an output information acquisition section 20a, a classification information acquisition section 20b, an effective presentation element information acquisition section 20c, a selection section 20d, a presentation command output section 20e, and an information presentation control section 20f.

The output information acquisition section 20a acquires pieces of output information O from information sources 100, 101, 102. The information source 100 is outside the straddled vehicle 1. Examples of the information source 100 include an external server that is communicable with the control device 20 of the straddled vehicle 1 via Internet. The information source 101 is inside the straddled vehicle 1. Examples of the information source 101 include various types of sensors (see FIG. 4) provided in the straddled vehicle 1. The information source 102 is in an accessory 303. The accessory 303 has an information presentation element 402 as well as the information source 102. Examples of the accessory 303 include a wearable device and the like. Examples of the information source 102 include communication devices or various types of sensors such as a heart rate sensor provided in a wearable device. An accessory 302 has an information presentation element 402, but does not have an information source 102. Examples of the accessory 302 include an HUD and the like.

The classification information acquisition section 20b acquires a piece of classification information C from each piece of output information O acquired by the output information acquisition section 20a.

The effective presentation element information acquisition section 20c acquires two or more pieces of effective presentation element information E from two or more information presentation elements 401, 402 that are available. The information presentation elements 401 are provided in the straddled vehicle 1. The information presentation elements 402 are provided in the accessories 302, 303.

The selection section 20d selects information presentation elements 401, 402 that are to present the pieces of output information O from the two or more information presentation elements 401, 402 specified via the two or more pieces of effective presentation element information E acquired by the effective presentation element information acquisition section 20c, the selection being made at least based on the pieces of classification information C. Here, in order for two or more pieces of output information O to be presented in a temporally overlapping manner, the selection section 20d selects at least one information presentation element 401, 402 that is to present each of the two or more pieces of output information O from the two or more information presentation elements 401, 402, the selection being made for each piece of output information O at least based on a relationship among the respective pieces of classification information C. Consequently, a correspondence relationship between each piece of output information O and an information presentation element 401, 402 that is to receive the piece of output information O is specified.

The presentation command output section 20e acquires a selection result S obtained by the selection section 20d. The presentation command output section 20e outputs a presentation command P for causing the information presentation elements 401, 402 selected by the selection section 20d to present the two or more pieces of output information C, respectively.

The information presentation control section 20f causes the information presentation elements 401, 402 selected by the selection section 20d to present the two or more pieces of output information O, respectively, based on the presentation command P given from the presentation command output section 20e.

FIG. 4 is a block diagram showing the control device 20, which serves as an information presentation assist device for a straddled vehicle according to the first embodiment.

The control device 20 includes a CPU 21, a storage device 22, and an input/output port 24.

The control device 20 includes, as the storage device 22, a non-volatile memory and a volatile memory. The non-volatile memory serves as an auxiliary storage device storing a control program and data necessary for arithmetic operations. The volatile memory serves as a main storage device temporarily storing data during an operation of the CPU 21. The CPU 21 reads out the control program and data from the storage device 22 as appropriate, and executes arithmetic operation processing and/or control processing. The input/output port 24 inputs and outputs signals. Through executing the control program, the CPU 21 functions as the output information acquisition section 20a, the classification information acquisition section 20b, the effective presentation element information acquisition section 20c, the selection section 20d, the presentation command output section 20e, and the information presentation control section 20f shown in FIG. 3. A short-range wireless communication I/F 25 is connected to the control device 20. Standards for the short-range wireless communication are not particularly limited, and for example, Bluetooth (registered trademark) may be adoptable.

Connected to the input/output port 24 are a wheel speed sensor 31, an accelerometer 32, an angular velocity sensor 33, a front sensor unit 34, an engine rotation speed sensor 35, and a fuel tank sensor 36. The wheel speed sensor 31 (ABS sensor) detects a rotation speed of the front wheel 4 and the rear wheel 5 of the straddled vehicle 1. A total distance traveled by the straddled vehicle 1 is, for example, generated by the control device 20 based on information received from the wheel speed sensor 31, and is stored in the storage device 22. The accelerometer 32 detects accelerations in orthogonal triaxial directions, for example. The angular velocity sensor 33 detects angular velocities about orthogonal three axes, for example. The three axes means a front-rear direction, a vertical direction, and a vehicle width direction of the straddled vehicle 1, for example. The accelerometer 32 and the angular velocity sensor 33 constitute an inertial measurement unit (IMU). The forward sensing unit 34 includes one or more of a camera, a millimeter wave radar, a microwave radar, a laser radar, an ultrasonic sensor, an acoustic sensor, an infrared sensor, a radio-wave/electric-field sensor, a magnetic sensor, and a distance image sensor, for example. The camera may be either monocular or binocular. These radars and sensors are configured, for example, to radiate a millimeter wave or the like from a front portion of the straddled vehicle 1 toward the forward side of the straddled vehicle 1, and then receive a reflected wave returning to the straddled vehicle 1 as a result of the millimeter wave being reflected from a vehicle in front or the like. The engine rotation speed sensor 35 detects a rotation speed of the engine 6. The fuel tank sensor 36 detects a residual fuel amount. Sensors different from these sensors 31 to 36 may be connected to the input/output port 24. Detection results obtained by, for example, the sensors 31 to 36 may either serve as output information received by the control device 20, or be processed or altered into output information by the control device 20. For example, the engine rotation speed as a piece of output information is inputted from the engine rotation speed sensor 35 to the control device 20. The residual fuel amount as a piece of output information is inputted from the fuel tank sensor 36 to the control device 20.

Connected to the input/output port 24 are an accelerator detector 37, a clutch detector 38, and a gear detector 39. The accelerator detector 37 detects an operation that the rider R performs on the accelerator operator 7b. The clutch detector 38 detects an operation that the rider R performs on the clutch lever 7a. The gear detector 39 detects a gear of the multistage transmission (not shown). Detectors different from the sensors 37 to 39 may be connected to the input/output port 24. Detection results obtained by, for example, the sensors 37 to 39 may either serve as output information received by the control device 20, or be processed or altered into output information by the control device 20.

Connected to the input/output port 24 are an on-vehicle navigation device 40 and an Internet communication unit 42. The on-vehicle navigation device 40 includes a global navigation satellite system (GNSS) receiver 41. Standards for the GNSS are not particularly limited, and for example, a global positioning system (GPS) may be adoptable. The on-vehicle navigation device 40 includes a CPU, a ROM, a RAM, and the like, though not shown. The on-vehicle navigation device 40 sets a destination of the straddled vehicle 1 in accordance with an operation performed by the rider R. The GNSS receiver 41 is able to acquire position information on the straddled vehicle 1. The on-vehicle navigation device 40 generates and outputs navigation information concerning a route from a current position of the straddled vehicle 1 to the destination, based on a signal acquired by the GNSS. The outputted navigation information, which serves as a piece of output information, is received by the control device 20, and is presented via the meter 10. In this embodiment, the on-vehicle navigation device 40 itself does not include any device (a display or a speaker) for presenting the navigation information to the rider R. However, it may be possible that the on-vehicle navigation device 40 includes a device for presenting navigation information to a rider. The on-vehicle navigation device 40 may be configured to output navigation information or position information on the straddled vehicle 1 to the control device (the information presentation assist device for a straddled vehicle) while presenting the navigation information to the rider with a device included in the on-vehicle navigation device 40 itself. Although this embodiment shows the GNSS receiver 41 included in the on-vehicle navigation device 40, a straddled vehicle may have a GNSS receiver provided separately from an on-vehicle navigation device. The Internet communication unit 42 is able to acquire various types of information via the Internet. A vehicle-to-vehicle/road-to-vehicle communication unit 43 is able to acquire various types of information through communication with a vehicle nearby and/or a roadside unit. Detectors different from the units 40, 42, 43 may be connected to the input/output port 24. Detection results obtained by the units 40, 42, 43 may either serve as output information received by the control device 20, or be processed or altered into output information by the control device 20. The road surface condition and the speed limit serving as pieces of output information are, for example, inputted from the on-vehicle navigation device 40, the Internet communication unit 42, or the vehicle-to-vehicle/road-to-vehicle communication unit 43, to the control device 20.

The meter 10 and the vehicle body speaker 11 are connected to the input/output port 24. The meter 10 visually presents output information by displaying an image. The vehicle body speaker 11 auditorily presents output information. The meter 10 and the vehicle body speaker 11 are standard equipment of the straddled vehicle 1. Identification information on the meter 10 and identification information on the vehicle body speaker 11 are prestored in the storage device 22.

The HUD screen 60 is connected to the input/output port 24. The HUD screen 60 visually presents output information by projecting an image. The HUD screen 60 is an optional component of the straddled vehicle 1. Identification information on the HUD screen 60 is stored in the storage device 22 at a time when the HUD screen 60 (projector) is added on. The pressure application projection 44 and the warm/cold pad 45, which are optional components, are also connected to the input/output port 24. The pressure application projection 44 and the warm/cold pad 45 function as information presentation elements.

The HMD 51 and the earphone 52 of the helmet 50, the wearable device 70, and the portable phone 80 are connected to the input/output port 24 via the short-range wireless communication I/F 25. The HMD 51 and the earphone 52 receive output information from the control device 20 via the short-range wireless communication I/F 25, and present the output information. The wearable device 70 includes a CPU, a ROM, a RAM, and the like as well as the display 71, the speaker 72, and the vibrator 73. The portable phone 80 includes a CPU, a ROM, a RAM, and the like as well as the display 81, the speaker 82, and the vibrator 83. The helmet 50, the wearable device 70, and the portable phone 80 are accessories belonging to the rider R. Here, the HMD 51 and the earphone 52 of the helmet 50, the wearable device 70, and the portable phone 80 each have already been paired with the control device 20 through an operation performed by the rider R. In other words, these devices have been registered in the storage device 22, as communication objects of the straddled vehicle 1. Identification information on each device is stored in the storage device 22 at a time of registration. Identification information on the control device 20 is stored in each device, too. Information inputted from the wearable device 70 or the portable phone 80 to the control device 20, or information generated as a result of the control device 20 processing or altering the information inputted from the wearable device 70 or the portable phone 80 to the control device 20, can be used as output information.

The electronic key 90 is connected to the input/output port 24 via a short-range wireless communication I/F 26 for a vehicle. The electronic key 90 has a control circuit including a microcomputer as well as the vibrator 93.

Processing executed by the control device 20 which serves as the information presentation assist device for a straddled vehicle will now be described. The following description will deal with a case where pairing of each accessory belonging to the rider R with the control device 20 is already completed.

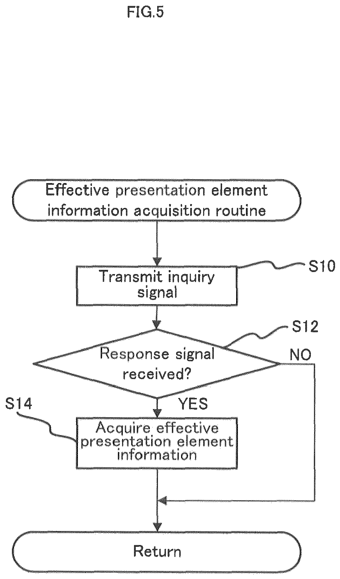

FIG. 5 is a flowchart showing an effective presentation element information acquisition routine. The effective presentation element information acquisition routine is, for example, executed when power supply to the control device 20 is started, and then executed at a predetermined cycle.

The CPU 21 transmits an inquiry signal (step S10). The CPU 21 transmits the inquiry signal to information presentation elements that are wire-connected to the control device 20. In this embodiment, the information presentation elements that are wire-connected are the meter 10, the vehicle body speaker 11, and the HUD screen 60. Although the pressure application projection 44 and the warm/cold pad 45 are also wire-connected, their functions are turned off in this embodiment. If the meter 10, the vehicle body speaker 11, and the HUD screen 60 receive the inquiry signal when they are available, each of them transmits a response signal containing a piece of effective presentation element information to the control device 20. The piece of effective presentation element information indicates that the information presentation element is in an available state. Since the functions of the pressure application projection 44 and the warm/cold pad 45 are off, the CPU 21 cannot acquire any effective presentation element information on the pressure application projection 44 and the warm/cold pad 45. In step S10, the CPU 21 acquires information on an information presentation element that is in the available state. At this time, the CPU 21 functions as the effective presentation element information acquisition section.

In step S10, the CPU 21 also transmits, via wireless communication, an inquiry signal to information presentation elements located within a wireless communication range or to accessories including such information presentation elements. Objects supposed to receive the inquiry signal via wireless communication are the HMD 51 and the speaker 52 of the helmet 50, the wearable device 70, the portable phone 80, and the electronic key 90. If the HMD 51, the speaker 52, the wearable device 70, the portable phone 80, and the electronic key 90 receive the inquiry signal when they are available, each of them transmits a response signal containing a piece of effective presentation element information to the control device 20.

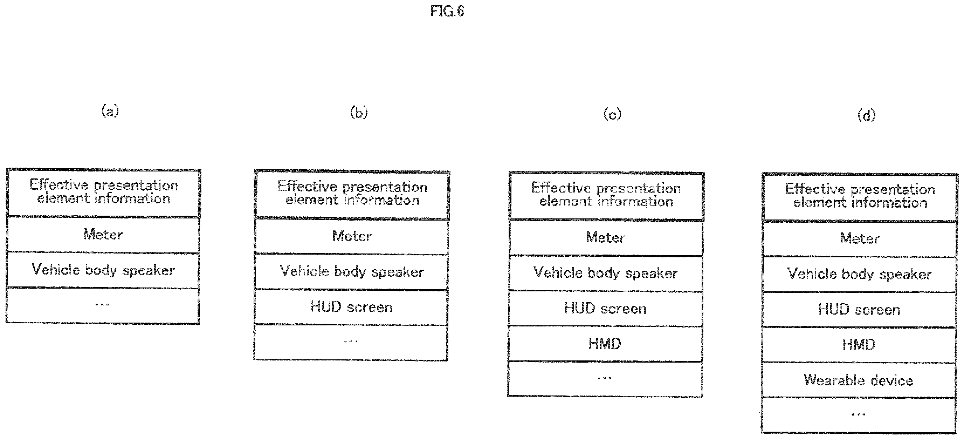

Then, the CPU 21 determines whether or not the response signal is received (step S12). If the CPU 21 does not receive the response signal (step S12: NO), this sub-routine is terminated. If the CPU 21 receives the response signal (step S12: YES), the CPU 21 acquires the piece of effective presentation element information contained in the response signal (step S14). FIG. 6(a) to (d) are explanatory diagrams showing pieces of effective presentation element information acquired. In a case of the straddled vehicle 1 including only the standard equipment, pieces of effective presentation element information related to the meter 10 and the vehicle body speaker 11 are stored in the storage device 22, as shown in FIG. 6(a). In a case of the HUD screen 60 being added on, a piece of effective presentation element information related to the HUD screen 60 is additionally stored in the storage device 22, as shown in FIG. 6(b). In a case of the rider R having an accessory, an additional piece of effective presentation element information is stored in the storage device 22. After the processing in step S14, this sub-routine is terminated.

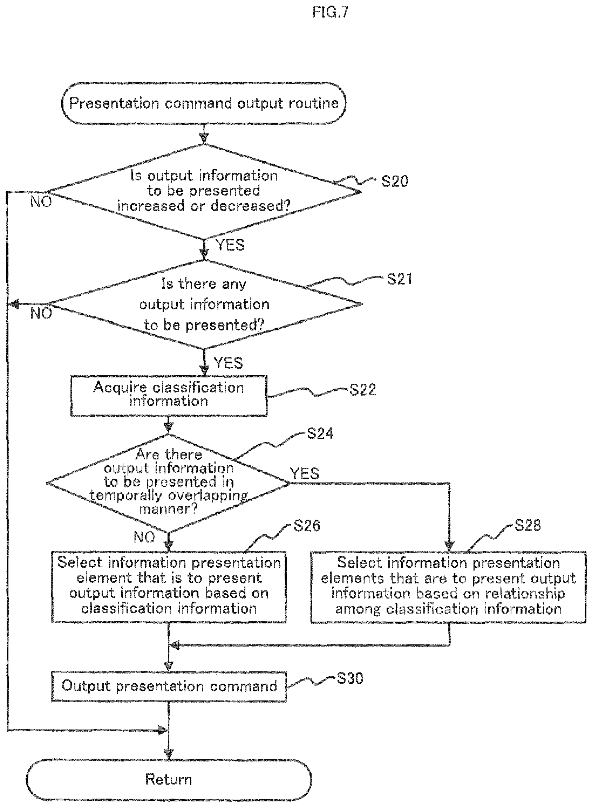

FIG. 7 is a flowchart showing a presentation command output routine. The presentation command output routine is, for example, executed when power supply to the control device 20 is started, and then executed at a predetermined cycle.

The CPU 21 determines whether or not the number of pieces of output information to be presented is increased or decreased (step S20). In this embodiment, for example, pieces of output information are inputted from various types of devices 31 to 43 and the like that are connected to the control device 20, or are generated as a result of the control device 20 processing or altering pieces of information that are inputted from various types of devices 31 to 43 and the like. The pieces of output information are stored in the storage device 22, for example. For each piece of output information, for example, a period for which the output information is presented to the rider, a timing when the presentation is started, a timing when the presentation is terminated, and the like, are specified. For instance, presentation of the road surface condition is started when the straddled vehicle 1 arrives at a position that is a predetermined distance (e.g., 1 km) away from a presentation object place (e.g., a rough road), and is terminated when the straddled vehicle 1 has passed through the presentation object place. Presentation of the incoming call notification is started when the portable phone 80 starts receiving an incoming call, and is terminated when the incoming call ends. Presentation of the specified total distance is started when the total distance traveled by the straddled vehicle 1 reaches a specified value, and is terminated after elapse of a predetermined time. The engine rotation speed is always presented. The speed limit is continuously presented while the vehicle 1 is traveling on a road for which a speed limit is set. The residual fuel amount is always presented. When presentation of a piece of output information is started or terminated, the number of pieces of output information to be presented is increased or decreased.

If the number of pieces of output information to be presented is neither increased nor decreased (step S20: NO), this sub-routine is terminated. As a result, the current presentation of the output information is maintained. If the number of pieces of output information to be presented is increased or decreased (step S20: YES), the CPU 21 determines whether or not there is any piece of output information to be presented (step S21). If there is no piece of output information to be presented (step S21: NO), this sub-routine is terminated. Consequently, a state where no piece of output information is presented is maintained. If there is any piece of output information to be presented (step S21: YES), the processing proceeds to step S22. Pieces of output information whose presence or absence is determined in step S21 are pieces of output information that are under integrated control of the control device 20 (the information presentation assist device for a straddled vehicle). In the straddled vehicle 1, pieces of output information different from the pieces of output information that are under integrated control of the control device 20 may be presented to the rider. In other words, the control device 20 is configured to present at least part of types of output information among all types of output information presented in the straddled vehicle 1. For instance, the control device 20 may output a presentation command so that an information presentation element presents not only a piece of output information which has a fixed output destination, but can also present a selectable piece of output information which can be presented via a chosen presentation destination. The straddled vehicle 1. may be configured such that pieces of output information different from the pieces of output information that are under integrated control of the control device 20 can be presented to the rider.

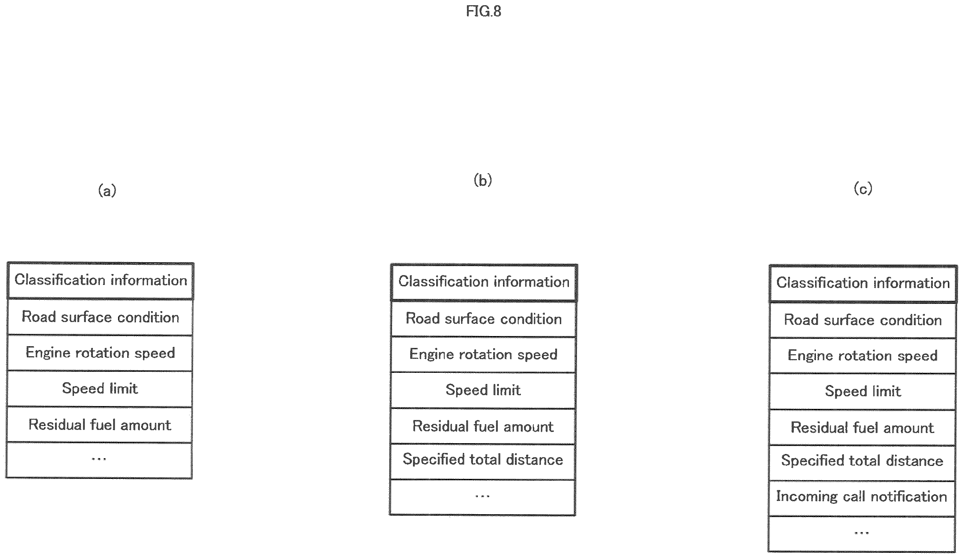

In step S22, the CPU 21 acquires classification information of the output information. For example, the CPU 21 acquires classification information from each piece of output information stored in the storage device 22. At this time, the CPU 21 functions as the classification information acquisition section. The acquired classification information is stored in the storage device 22. FIG. 8(a) to (c) are explanatory diagrams showing classification information stored in the storage device 22. Pieces of classification information shown in FIG. 8(a) are pieces of classification information corresponding to the time point T1 of FIG. 1. At the time point T1, pieces of classification information related to the road surface condition, the engine rotation speed, the speed limit, and the residual fuel amount are acquired. Pieces of classification information shown in FIG. 8(b) are pieces of classification information corresponding to the time point T2 of FIG. 1. At the time point T2, a piece of classification information related to the specified total distance is added. Pieces of classification information shown in FIG. 8(c) are pieces of classification information corresponding to the time point T3 of FIG. 1. The pieces of classification information stored in the storage device 22 correspond to pieces of output information to be presented to the rider. When presentation of a piece of output information to the rider is terminated, a piece of classification information corresponding to the piece of output information is deleted from the storage device 22.

After step S22, the CPU 21 determines whether or not there are pieces of output information to be presented in a temporally overlapping manner (step S24). In a case where two or more pieces of classification information are stored in the storage device 22 as shown in FIG. 8(a) to (c), there are two or more pieces of output information to be presented in a temporally overlapping manner. In a case where one piece of classification information is stored in the storage device 22, there are not pieces of output information to be presented in a temporally overlapping manner. In this manner, whether or not there are pieces of output information to be presented in a temporally overlapping manner can be determined based on pieces of classification information stored in the storage device 22. The CPU 21 determines whether or not there are pieces of output information to be presented in a temporally overlapping manner, based on the pieces of classification information stored in the storage device 22.

If there are no pieces of output information to be presented in a temporally overlapping manner (step S24: NO), the CPU 21 selects an information presentation element that is to present a piece of output information, based on the piece of classification information (step S26). The information presentation element that is to present the piece of output information is selected from information presentation elements corresponding to the pieces of effective presentation element information stored in the storage device 22 (see FIG. 6(a) to (d)).

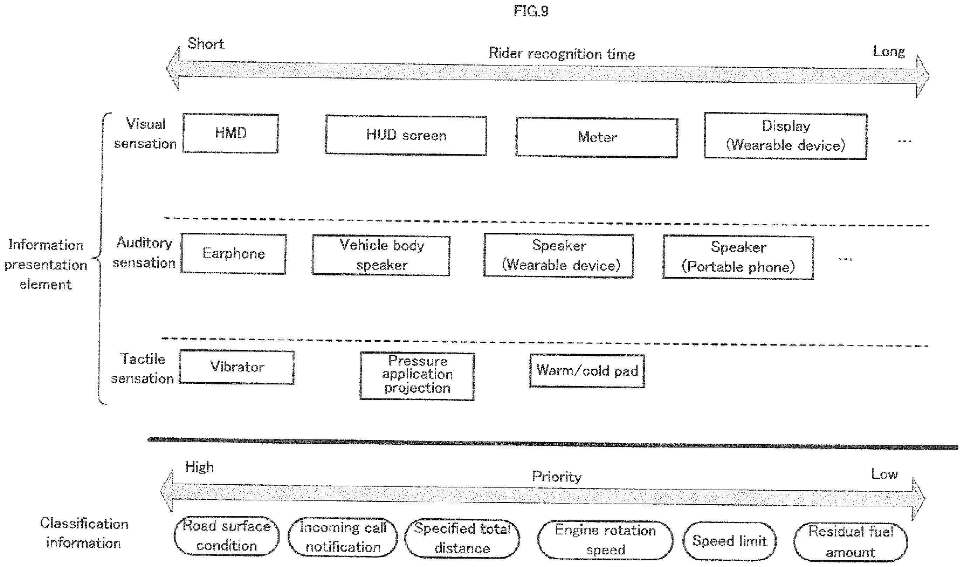

In this embodiment, a rider recognition time is set for each information presentation element, as shown in the upper part of FIG. 9. The rider recognition time is an example of a second parameter. The information presentation element and the rider recognition time are associated with each other, and stored as second data in the storage device 22. The storage device 22 storing the second data functions as a second data storage section. The rider recognition time shown in FIG. 9 is a time taken from when the information presentation element starts presenting a piece of output information to when the rider recognizes the piece of output information, as mentioned above.

A priority level is set for each piece of classification information, as shown in the lower part of FIG. 9. The priority level is an example of a first parameter. The piece of classification information and the priority level are associated with each other, and stored as first data in the storage device 22. The storage device 22 storing the first data functions as a first data storage section. For example, the road surface condition as a piece of output information is associated with a relatively high priority level. To present the road surface condition, an information presentation element associated with a short rider recognition time, namely, the HMD, is selected. Each piece of classification information is associated with how to present the piece of output information, too. To present the incoming call notification, the HMD is selected as shown in FIG. 1, the earphone is selected as an auditory information presentation element, and the vibrator is selected as a tactile information presentation element.

If there are pieces of output information to be presented in a temporally overlapping manner (step S24: YES), the CPU 21 selects information presentation elements that are to present the pieces of output information, based on a relationship among pieces of classification information (step S28). In step S28, like in step S26, at least one information presentation element that is to present a piece of output information is selected in relation to each piece of classification information, based on the rider recognition time and the priority level shown in FIG. 9. In step S26 or S28, the CPU 21 functions as the selection section.

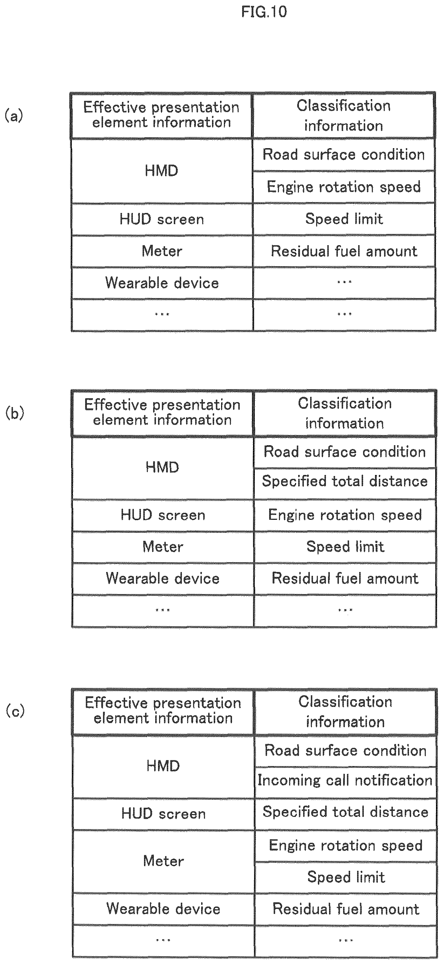

After step S26 or S28, the CPU 21 outputs a presentation command (step S30). The presentation command contains, for example, a piece of effective presentation element information and a piece of classification information associated with the piece of effective presentation element information, as shown in FIG. 10(a) to (c). FIG. 10(a) shows a presentation command at the time point T1 of FIG. 1. FIG. 10(b) shows a presentation command at the time point T2. FIG. 10(c) shows a presentation command at the time point T3. A correspondence relationship between a piece of classification information and a piece of effective presentation element information in the presentation command corresponds to a correspondence relationship between a piece of output information and an information presentation element that is selected as an output destination. In this embodiment, the presentation command outputted from the CPU 21 is stored in the storage device 22. Then, this sub-routine is terminated.

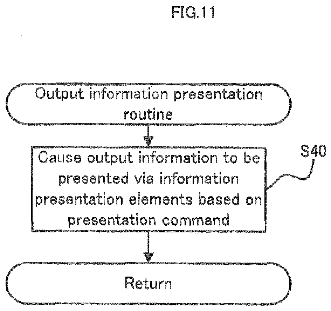

FIG. 11 is a flowchart showing an output information presentation routine. The output information presentation routine, like the presentation command output routine, is executed at a predetermined cycle. In this sub-routine, the CPU 21 controls each information presentation element such that the information presentation element presents a piece of output information, based on the presentation command stored in the storage device 22 (step S40). As a result, for example, the piece of output information is presented in an information presentation section, as shown in FIG. 1. Once a new presentation command is generated in the presentation command output routine, presentation of output information based on the new presentation command is performed in the subsequent output information presentation routine. Consequently, presented output information is changed.

As thus far described, the control device 20 (the information presentation assist device for a straddled vehicle) of this embodiment performs integrated control on two or more pieces of output information being presented via two or more information presentation elements. As shown in FIG. 9, the priority level of the incoming call notification is higher than the priority level of the specified total distance. The rider recognition time associated with the HMD 51 is shorter than the rider recognition time associated with the HUD screen 60. Thus, to start presenting the incoming call notification when the specified total distance is presented in the right area XR of the HMD 51 (see the time points T2 and T3 shown in FIG. 1), the incoming call notification instead of the specified total distance is presented in the right area XR of the HMD 51, and the specified total distance is presented on the HUD screen 60. As a result, the specified total distance becomes less easily recognizable, and the incoming call notification starts being presented in an easily recognizable manner. The control device 20 can control ease and difficulty in recognizing two or more pieces of output information. Accordingly, much information can be effectively given to the rider.

In this embodiment, the relationship among two or more pieces of classification information is specified by the priority levels set for the respective pieces of classification information (see FIG. 9). The priority levels set for the respective pieces of classification information are stored in the storage device 22. The relationship among two or more information presentation elements is specified by the rider recognition times set for the respective information presentation elements (see FIG. 9). The rider recognition times set for the respective information presentation elements are stored in the storage device 22. In this embodiment, a priority level is set for each piece of classification information, and a rider recognition time is set for each information presentation element. As a piece of classification information has a higher priority level, an information presentation element having a shorter rider recognition time is selected in relation to a piece of output information corresponding to the piece of classification information. The priority level is one example of the first parameter that is set for the classification information. The rider recognition time is one example of the second parameter that is set for the information presentation element. In an information presentation assist device for a straddled vehicle according to a preferred embodiment, the first parameter is set for the classification information, and the second parameter is set for the information presentation element. The first and second parameters each are a parameter whose magnitudes can be specified, like the priority level or the rider recognition time described above.

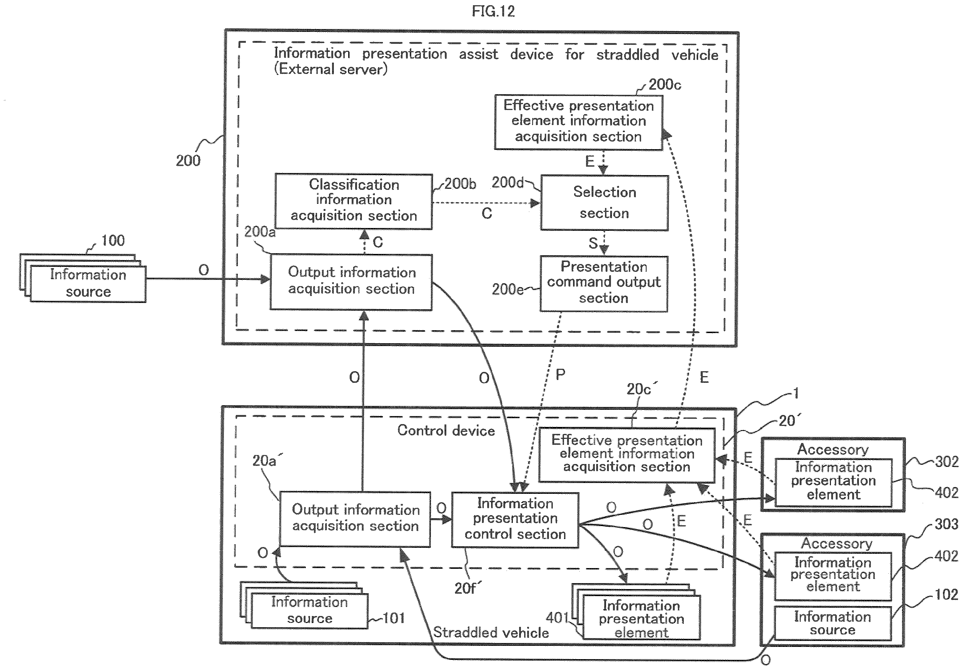

FIG. 12 is a function block diagram showing an information presentation system for a straddled vehicle according to a second embodiment. The information presentation system for a straddled vehicle includes an external server 200 serving as an information presentation assist device for a straddled vehicle, and a straddled vehicle 1. The information presentation system for a straddled vehicle according to the second embodiment also includes accessories 302, 303, though the accessories 302, 303 are not always essential components of the system. The external server 200 is communicable with a control device 20 ' of the straddled vehicle 1. The external server 200 includes, as functional sections, an output information acquisition section 200a, a classification information acquisition section 200b, an effective presentation element information acquisition section 200c, a selection section 200d, and a presentation command output section 200e. The external server 200 has a communication device for communication with a control device (CPU), a storage device, the straddled vehicle 1, and the like. In the external server 200, the control device reads out and executes programs stored in the storage device, to function as the respective functional sections as described above.

The straddled vehicle 1 includes the control device 20'. The control device 20' of this embodiment does not correspond to an information presentation assist device for a straddled vehicle. The control device 20' includes an output information acquisition section 20a', an effective presentation element information acquisition section 20c', and an information presentation control section 20f'. The straddled vehicle 1 further includes two or more information sources 101 and two or more information presentation elements 401. Accessories 302, 303 belonging to the rider are communicable with the control device 20' of the straddled vehicle 1. The accessory 302 has an information presentation element 402. The accessory 303 has an information presentation element 402 and an information source 102.

The output information acquisition section 200a acquires pieces of output information O from external information sources 100, and supplies the acquired pieces of output information O to the information presentation control section 20f' of the straddled vehicle 1. The output information acquisition section 200a also acquires pieces of output information O from the information sources 101 of the straddled vehicle 1 and/or the information source 102 of the accessory 303 via the output information acquisition section 20a' included in the control device 20' of the straddled vehicle 1. The classification information acquisition section 200b acquires pieces of classification information C from the pieces of output information O acquired by the output information acquisition section 200a. The effective presentation element information acquisition section 200c acquires pieces of effective presentation element information E from the information presentation elements 401, 402 via the effective presentation element information acquisition section 20c' included in the control device 20' of the straddled vehicle 1. In a case of presenting two or more pieces of output information O in a temporally mutually overlapping manner, the selection section 200d selects information presentation elements 401, 402 that are to present the pieces of output information O from two or more information presentation elements 401, 402, the selection being made for each piece of output information O at least based on a relationship among the two or more pieces of classification information C. The presentation command output section 200e acquires a selection result S obtained by the selection section 200d. The presentation command output section 200e outputs a presentation command P to the information presentation control section 20f included in the control device 20' of the straddled vehicle 1.

The pieces of output information O supplied from the external information sources 100 are supplied to the information presentation control section 20f' of the straddled vehicle 1 via the output information acquisition section 200a of the external server 200. The pieces of output information O supplied from the information sources 101 of the straddled vehicle 1 and the information source 102 of the accessory 303 are supplied to the information presentation control section 20f of the straddled vehicle 1 via the output information acquisition section 20a' included in the control device 20' of the straddled vehicle 1. The information presentation control section 20f' causes the information presentation elements 401, 402 selected by the selection section 200d to present the two or more pieces of output information O, respectively, based on the presentation command P given from the presentation command output section 200e of the external server 200.

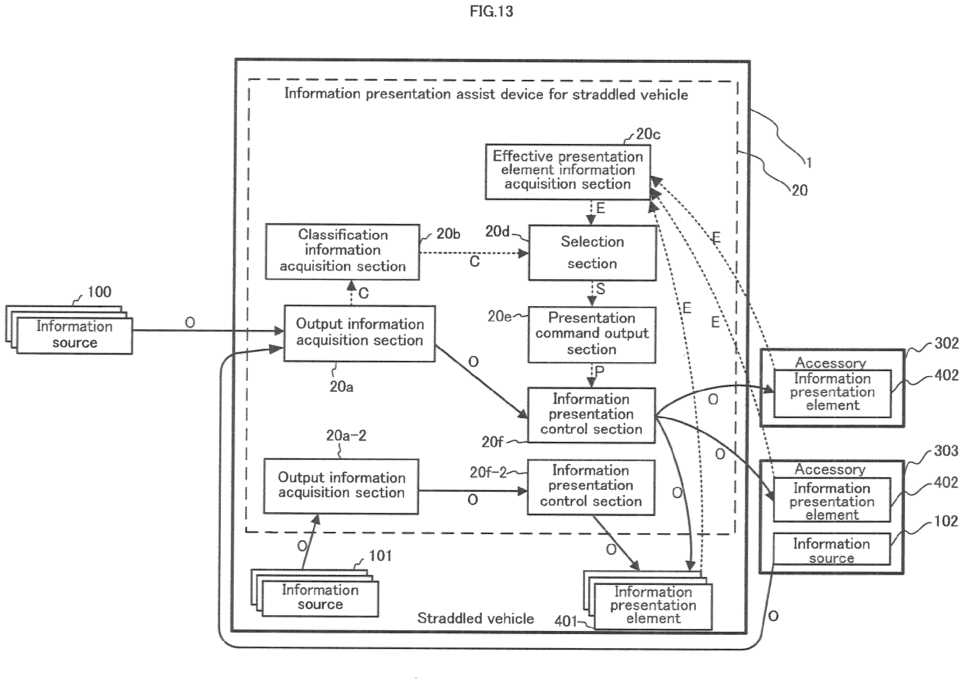

FIG. 13 is a function block diagram showing a control device 20 which serves as an information presentation assist device for a straddled vehicle according to a third embodiment. The control device 20 according to the third embodiment has the same configuration as that of the control device 20 according to the first embodiment (see FIG. 3), except for the following. The control device 20 of the third embodiment includes an output information acquisition section 20a-2 and an information presentation control section 20f-2, in addition to the output information acquisition section 20a and the information presentation control section 20f. Like in the first embodiment, information presentation elements 401, 402 that are to present pieces of output information O supplied from the external information sources 100 and the information source 102 of the accessory 303 are selected from two or more information presentation elements 401, 402, the selection being made for each piece of output information O at least based on a relationship among two or more pieces of classification information C. As a result, the pieces of output information O supplied from the external information sources 100 and the information source 102 of the accessory are presented via the selected information presentation elements 401, 402. On the other hand, pieces of output information O supplied from the information sources 101 of the straddled vehicle 1 are acquired by the output information acquisition section 20a-2, and are presented via the information presentation elements 401 under control of the information presentation control section 20f-2.

In the third embodiment, pieces of output information O supplied from the information sources 101 of the straddled vehicle 1 are presented via information presentation elements 401 that are prespecified. For pieces of output information O supplied from the information sources 100, 102, on the other hand, information presentation elements 401, 402 for presenting them are selected based on the relationship among the two or more pieces of classification information C. The pieces of output information O supplied from the information sources 100, 102 are presented via the selected information presentation elements 401, 402.

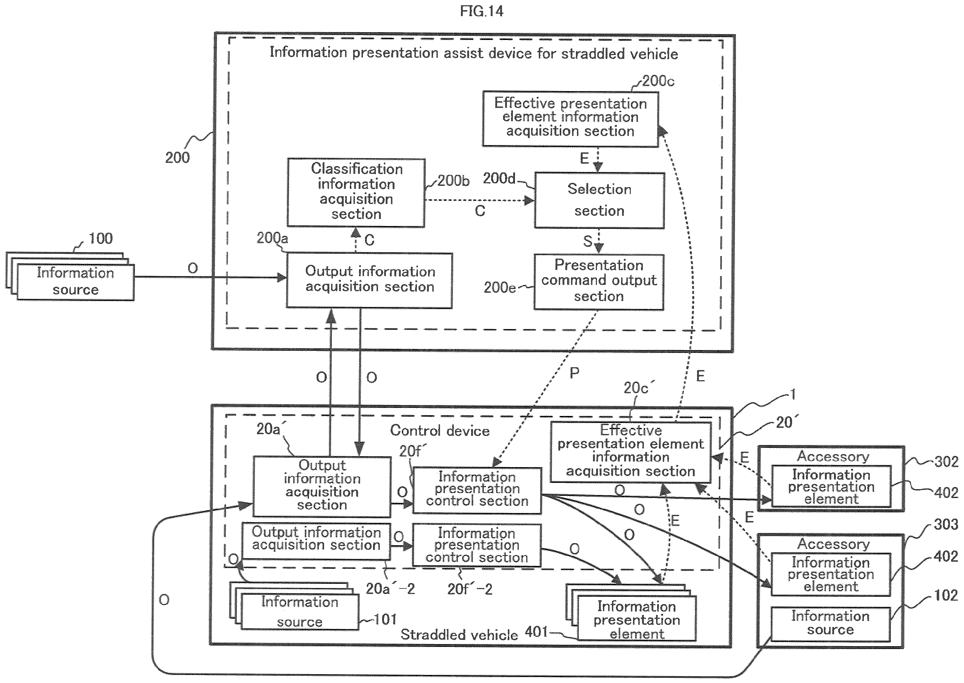

FIG. 14 is a functional block diagram showing an information presentation system for a straddled vehicle according to a fourth embodiment. The system according to the fourth embodiment has the same configuration as that of the system according to the second embodiment (see FIG. 12), except for the following. In the system according to the fourth embodiment, the control device 20' of the straddled vehicle 1 includes an output information acquisition section 20a'-2 and an information presentation control section 20f'-2 in addition to the output information acquisition section 20a' and the information presentation control section 20f'.

Pieces of output information O supplied from the external information sources 100 are acquired by the output information acquisition section 200a of the external server 200, and are supplied to the output information acquisition section 20a' of the straddled vehicle 1. Apiece of output information O supplied from the information source 102 of the accessory 303 is acquired by the output information acquisition section 20a' of the straddled vehicle 1, and is supplied to the output information acquisition section 200a of the external server 200. In the external server 200, information presentation elements 401, 402 that are to present the pieces of output information O are selected from the two or more information presentation elements 401, 402, the selection being made for each piece of output information O at least based on a relationship among two or more pieces of classification information C. Based on a selection result S, the presentation command output section 200e of the external server 200 supplies a presentation command P to the information presentation control section 20f' of the straddled vehicle 1. In the straddled vehicle 1, the output information acquisition section 20a' supplies the pieces of output information O acquired from the information sources 100, 102 to the information presentation control section 20f'. The information presentation control section 20f' causes each piece of output information O to be presented via the information presentation element 401, 402 that has been selected in relation to the piece of output information O. On the other hand, pieces of output information O supplied from the information sources 101 of the straddled vehicle 1 are acquired by the output information acquisition section 20a'-2, and are presented via the information presentation elements 401 under control of the information presentation control section 20f'-2.

In the fourth embodiment as well as the third embodiment, pieces of output information O supplied from the information sources 101 of the straddled vehicle 1 are presented via information presentation elements 401 that are prespecified. For pieces of output information O supplied from the information sources 100, 102, on the other hand, information presentation elements 401, 402 for presenting them are selected based on the relationship among two or more pieces of classification information C. The pieces of output information O supplied from the information sources 100, 102 are presented via the selected information presentation elements 401, 402.

In the straddled vehicles according to the third and fourth embodiments, parts of output information is presented via an information presentation element that is prespecified, while other parts of the output information is presented via an information presentation element that is selected by the information presentation assist device for a straddled vehicle. This makes it possible that the information presentation assist device for a straddled vehicle effectively presents many pieces of output information while causing a piece of output information whose display position should preferably be unchanged to be presented via a pre-specified information presentation element, for example. It is not always necessary that the information presentation assist device for a straddled vehicle performs integrated control on all pieces of output information presented via the straddled vehicle or accessories belonging to the rider.

The preceding embodiments have dealt with a case where the selection section selects an information presentation element that is to present each of two or more pieces of output information, the selection being made based on a relationship among two or more pieces of classification information specified by the first parameter (priority level) and the second parameter (rider recognition time). Operations of the selection section are not limited to the ones illustrated in the preceding embodiments, and may be operations as illustrated in a fifth embodiment described below, for example.

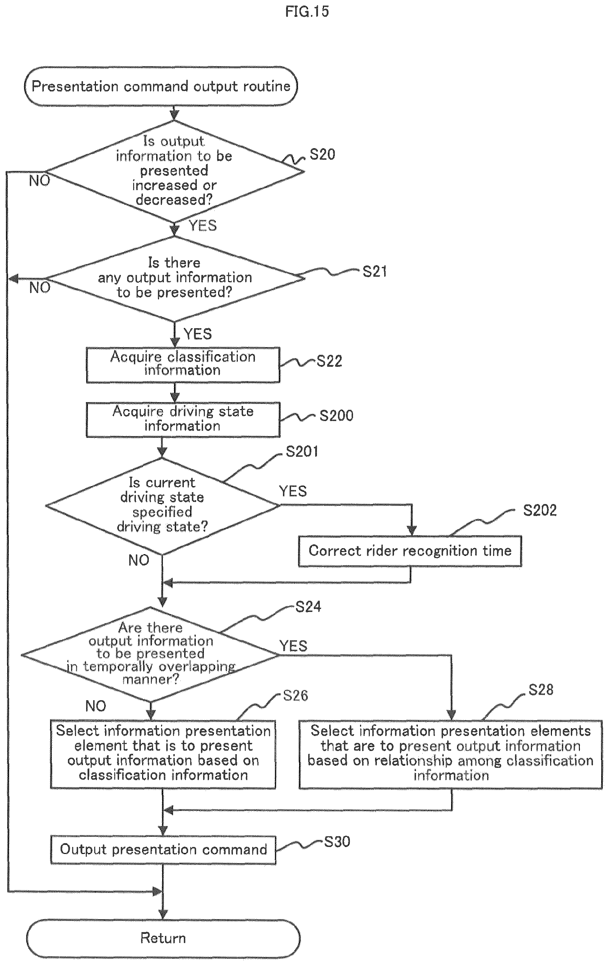

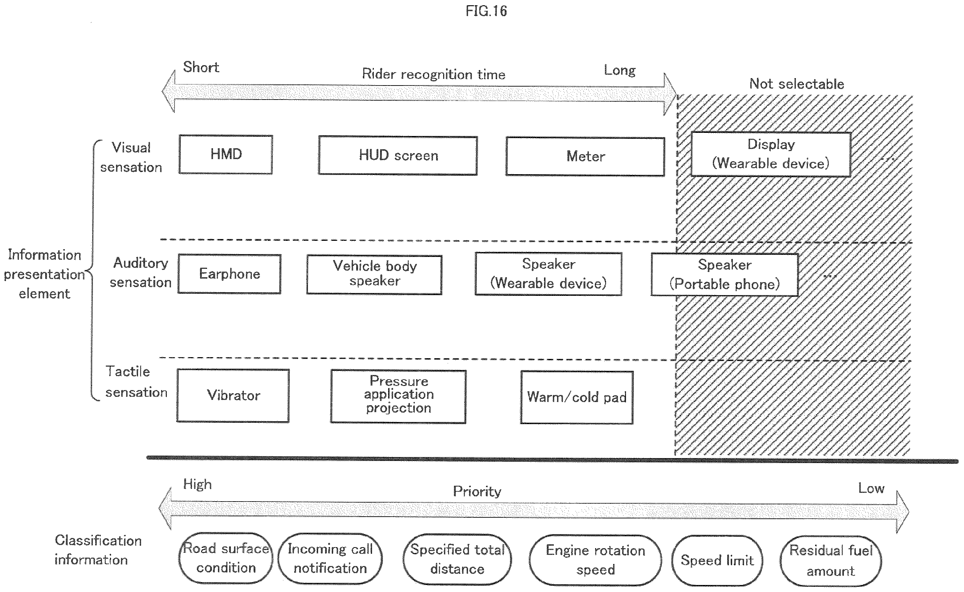

The fifth embodiment will now be described with reference to FIG. 15 and FIG. 16. In the fifth embodiment, the selection section selects an information presentation element that is to present each of two or more pieces of output information, the selection being made based on a relationship among two or more pieces of classification information specified by the first parameter (priority level), the second parameter (rider recognition time), and a driving state. An information presentation assist device for a straddled vehicle according to the fifth embodiment has the same hardware configuration as that of the first embodiment.

FIG. 15 is a flowchart showing a presentation command output routine according to the fifth embodiment. The flowchart shown in FIG. 15 is different from the flowchart shown in FIG. 7, only in steps S200 to S202. Descriptions of steps S200 to S202 will be given, therefore.

After step S22, the CPU 21 acquires driving state information (step S200). At this time, the CPU 21 functions as a driving state information acquisition section. In this embodiment, the driving state information indicates a state of the straddled vehicle. The driving state information is information obtained by various types of devices 31 to 43 shown in FIG. 4, or information resulting from processing or alteration made on the information obtained by the various types of devices 31 to 43. The information thus acquired is stored in the storage device 22.

In step S201, the CPU 21 determines whether or not the current driving state is a specified driving state. Examples of the specified driving state include, but are not particularly limited to, a state where the vehicle speed is equal to or higher than a predetermined speed and a state where the lean angle is equal to or larger than a predetermined angle. If the current driving state is not the specified driving state (step S201: NO), the processing proceeds to step S24. In this case, step S26 or S28 is executed, in which an information presentation element is selected based on a relationship among two or more pieces of classification information and the rider recognition time shown in FIG. 9.

If the current driving state is the specified driving state (step S201: YES), the CPU 21 corrects the rider recognition time (step S202). How to correct it is, for example, but not limited to, the following.

When the vehicle speed is high and/or when the lean angle is large, the rider's brain has a reduced margin in processing resources. As a result, a piece of output information presented via an information presentation element having a long rider recognition time becomes difficult to recognize for the rider. This is why in step S202 the CPU 21 corrects the rider recognition time so as to exclude an information presentation element having a long rider recognition time from selectable options as shown in FIG. 16. In an example shown in FIG. 16, the display 71 of the wearable device 70 is excluded from the selectable options. After step S202, the processing proceeds to step S24. In this case, the CPU 21 does not select the display 71 of the wearable device 70 in step S26 or S28. Consequently, a piece of output information that should have been presented on the display 71 if the display 71 was selected as an information presentation element for presenting the piece of output information is not presented after all.

In the fifth embodiment, an information presentation element that is to present a piece of output information is selected based on the relationship among two or more pieces of classification information specified by the first parameter, the second parameter, and the driving state. More specifically, the second parameter is corrected in accordance with the driving state, and an information presentation element that is to present a piece of output information is selected based on the corrected second parameter and the driving state. Accordingly, when there is a small margin in processing resources of the rider's brain, a control can be made such that an information presentation element that is difficult to recognize for the rider does not present any piece of output information or such that a piece of output information that is less interesting to the rider is not presented. Presentation of information to the rider can be made more effectively. Although the fifth embodiment illustrates the case where the second parameter is corrected in accordance with the driving state, it may also be acceptable that the relationship among two or more pieces of classification information specified by the first parameter is corrected in accordance with the driving state. To be specific, the relationship may be corrected such that a piece of output information belonging to a classification that is relatively uninteresting to the rider is not presented under a driving state where a margin in processing resources of the rider's brain is reduced.

### Reference Signs List

- 1: straddled vehicle
- 2: seat
- 3: handle
- 4: front wheel
- 5: rear wheel
- 6: engine
- 7a: clutch lever
- 7b: accelerator operator
- 7c: shift pedal
- 10: meter (instrument panel)
- 20: control device (information presentation assist device for straddled vehicle)
- 21: CPU
- 22: storage device
- 50: helmet
- 51: HMD
- 60: HUD screen
- 70: wearable device
- 80: portable phone
- 100, 101, 102: information source
- 302, 303: accessory
- 401, 402: information presentation element

## Claims

1. An information presentation assist device (20) for a straddled vehicle (1),
the information presentation assist device (20) for a straddled vehicle (1) comprising:
an effective presentation element information acquisition section (20c, 20c', 200c) configured to acquire pieces of effective presentation element information related to two or more information presentation elements (401, 402) that are provided in the straddled vehicle (1) or in an accessory (302, 303) belonging to a rider of the straddled vehicle (1) and that are in an available state;
a classification information acquisition section (20b, 200b) configured to acquire pieces of classification information (C) related to types of output information (O); **characterized by**
a selection section (20d, 200d) that is configured to, in a case of presenting the two or more pieces of output information (O) in a temporally overlapping manner, select at least one information presentation element (401, 402) that is to present each of the two or more pieces of output information (O) from the two or more information presentation elements (401, 402) that are in the available state, the selection being made at least based on a relationship among the two or more pieces of classification information (C) corresponding to the two or more pieces of output information (O); and
a presentation command output section (20e, 200e) configured to output a presentation command for causing each of the two or more pieces of output information (O) to be presented via the information presentation element (401, 402) selected by the selection section (20d, 200d).

2. The information presentation assist device (20) for a straddled vehicle (1) according to claim 1,
the information presentation assist device (20) for a straddled vehicle (1) further comprising a first data storage section (22) that stores first data indicating a correspondence relationship between the pieces of classification information (C) and first parameters that are set for the respective pieces of classification information (C), wherein
the selection section (20d, 200d) is configured to specify the relationship among the two or more pieces of classification information (C) by mutually comparing the first parameters set for the respective pieces of classification information (C).

3. The information presentation assist device (20) for a straddled vehicle (1) according to claim 1 or 2,
the information presentation assist device (20) for a straddled vehicle (1) further comprising a second data storage section (22) that stores second data indicating a correspondence relationship between the information presentation elements (401, 402) and second parameters that are set for the respective information presentation elements (401, 402), wherein
the selection section (20d, 200d) is configured to select at least one information presentation element (401, 402) that is to present each of the two or more pieces of output information (O), at least based on the relationship among the two or more pieces of classification information (C) corresponding to the two or more pieces of output information (O) and the second parameter.

4. The information presentation assist device (20) for a straddled vehicle (1) according to any one of claims 1 to 3, wherein
the selection section (20d, 200d) is configured to select at least one information presentation element (401, 402) that is to present each of the two or more pieces of output information (O), the selection being made for each of the two or more pieces of output information (O) at least based on the relationship among the two or more pieces of classification information (C) corresponding to the two or more pieces of output information (O) and a rider recognition time, the rider recognition time being a time taken from when each of the information presentation elements (401, 402) starts presenting the piece of output information (O) to when the rider recognizes the piece of output information (O).

5. The information presentation assist device (20) for a straddled vehicle (1) according to claim 4,
the information presentation assist device (20) for a straddled vehicle (1) further comprising a driving state information acquisition section (21) configured to acquire driving state information related to a driving state of the straddled vehicle (1) driven by the rider, wherein
the selection section (20d, 200d) is configured to select at least one information presentation element (401, 402) that is to present each of the two or more pieces of output information (O), the selection being made for each of the two or more pieces of output information (O) at least based on the relationship among the two or more pieces of classification information (C) corresponding to the two or more pieces of output information (O), the rider recognition time, and the driving state information acquired by the driving state information acquisition section (21).

6. The information presentation assist device (20) for a straddled vehicle (1) according to any one of claims 1 to 3,
the information presentation assist device (20) for a straddled vehicle (1) further comprising a driving state information acquisition section (21) configured to acquire driving state information related to a driving state of the straddled vehicle (1) driven by the rider, wherein
the selection section (20d, 200d) is configured to select at least one information presentation element (401, 402) that is to present each of the two or more pieces of output information (O), the selection being made for each of the two or more pieces of output information (O) at least based on the relationship among the two or more pieces of classification information (C) corresponding to the two or more pieces of output information (O) and the driving state information acquired by the driving state information acquisition section (21).

7. The information presentation assist device (20) for a straddled vehicle (1) according to any one of claims 1 to 6, wherein
the two or more information presentation elements (401, 402) include at least two display parts that display pieces of output information (O) at different display positions to each other.

8. The information presentation assist device (20) for a straddled vehicle (1) according to any one of claims 1 to 7,
the information presentation assist device (20) for a straddled vehicle (1) further comprising:
an output information acquisition section (20a, 20a', 200a) configured to acquire the pieces of output information (O); and
an information presentation control section (20f, 20f', 20f-2, 20f'-2) configured to cause each of the two or more pieces of output information (O) to be presented via the information presentation element (401, 402) selected by the selection section (20d, 200d), based on the presentation command given from the presentation command output section (20e, 200e).

9. An information presentation system for a straddled vehicle (1),
the information presentation system for a straddled vehicle (1) including:
the information presentation assist device (20) for a straddled vehicle (1) according to claim 8, provided in the straddled vehicle (1); and
the two or more information presentation elements (401, 402) provided in the straddled vehicle (1) or in the accessory (302, 303).

10. An information presentation system for a straddled vehicle (1),
the information presentation system for a straddled vehicle (1) including:
the information presentation assist device (20) for a straddled vehicle (1) according to any one of claims 1 to 7, provided at a position not in the straddled vehicle (1) nor in the accessory (302, 303);
an information presentation control section (20f, 20f', 20f-2, 20f'-2) provided in the straddled vehicle (1) or in the accessory (302, 303), the information presentation control section (20f, 20f', 20f-2, 20f'-2) causing each of the two or more pieces of output information (O) to be presented via the information presentation element (401, 402) selected by the selection section (20d, 200d) based on the presentation command given from the presentation command output section (20e, 200e); and
the two or more information presentation elements (401, 402) provided in the straddled vehicle (1) or in the accessory (302, 303).

## Patentansprüche

1. Eine Informationspräsentationsunterstützungsvorrichtung (20) für ein Spreizsitzfahrzeug (1),
wobei die Informationspräsentationsunterstützungsvorrichtung (20) für ein Spreizsitzfahrzeug (1) folgende Merkmale aufweist:
einen Effektive-Präsentationselementinformationen-Erfassungsabschnitt (20c, 20c', 200c), der dazu konfiguriert ist, effektive Präsentationselementinformationen zu erfassen, die sich auf zwei oder mehr Informationspräsentationselemente (401, 402) beziehen, die in dem Spreizsitzfahrzeug (1) oder in einem Zusatzgerät (302, 303) vorgesehen sind, das einem Fahrer des Spreizsitzfahrzeugs (1) gehört, und die in einem verfügbaren Zustand sind;
einen Klassifizierungsinformationen-Erfassungsabschnitt (20b, 200b), der dazu konfiguriert ist, Klassifizierungsinformationen (C) zu erfassen, die sich auf Arten von Ausgabeinformationen (O) beziehen; **gekennzeichnet durch**
einen Auswahlabschnitt (20d, 200d), der dazu konfiguriert ist, im Fall des Präsentierens der zwei oder mehr Ausgabeinformationen (O) auf eine zeitlich überlappende Weise zumindest ein Informationspräsentationselement (401, 402) auszuwählen, das jede der zwei oder mehr Ausgabeinformationen (O) von den zwei oder mehr Informationspräsentationselementen (401, 402), die in dem verfügbaren Zustand sind, präsentieren soll, wobei die Auswahl zumindest basierend auf einer Beziehung zwischen den zwei oder mehr Klassifizierungsinformationen (C) getroffen wird, die den zwei oder mehr Ausgabeinformationen (O) entsprechen; und
einen Präsentationsbefehl-Ausgabeabschnitt (20e, 200e), der dazu konfiguriert ist, einen Präsentationsbefehl auszugeben, zum Bewirken, dass jede der zwei oder mehr Ausgabeinformationen (O) über das Informationspräsentationselement (401, 402) präsentiert wird, das durch den Auswahlabschnitt (20d, 200d) ausgewählt wird.

2. Die Informationspräsentationsunterstützungsvorrichtung (20) für ein Spreizsitzfahrzeug (1) gemäß Anspruch 1,
wobei die Informationspräsentationsunterstützungsvorrichtung (20) für ein Spreizsitzfahrzeug (1) ferner einen ersten Datenspeicherabschnitt (22) aufweist, der erste Daten, die eine Entsprechungsbeziehung zwischen den Klassifizierungsinformationen (C) anzeigen, und erste Parameter speichert, die für die jeweiligen Klassifizierungsinformationen (C) eingestellt sind, wobei
der Auswahlabschnitt (20d, 200d) dazu konfiguriert ist, die Beziehung zwischen den zwei oder mehr Klassifizierungsinformationen (C) zu spezifizieren durch gegenseitiges Vergleichen der ersten Parameter, die für die jeweiligen Klassifizierungsinformationen (C) eingestellt sind.

3. Die Informationspräsentationsunterstützungsvorrichtung (20) für ein Spreizsitzfahrzeug (1) gemäß Anspruch 1 oder 2,
wobei die Informationspräsentationsunterstützungsvorrichtung (20) für ein Spreizsitzfahrzeug (1) ferner einen zweiten Datenspeicherabschnitt (22) aufweist, der zweite Daten, die eine Entsprechungsbeziehung zwischen den Informationspräsentationselementen (401, 402) anzeigen, und zweite Parameter speichert, die für die jeweiligen Informationspräsentationselemente (401, 402) eingestellt sind, wobei
der Auswahlabschnitt (20d, 200d) dazu konfiguriert ist, zumindest ein Informationspräsentationselement (401, 402) auszuwählen, das jede der zwei oder mehr Ausgabeinformationen (O) präsentieren soll, zumindest basierend auf der Beziehung zwischen den zwei oder mehr Klassifizierungsinformationen (C), die den zwei oder mehr Ausgabeinformationen (O) entsprechen, und dem zweiten Parameter.

4. Die Informationspräsentationsunterstützungsvorrichtung (20) für ein Spreizsitzfahrzeug (1) gemäß einem der Ansprüche 1 bis 3, bei dem
der Auswahlabschnitt (20d, 200d) dazu konfiguriert ist, zumindest ein Informationspräsentationselement (401, 402) auszuwählen, das jede der zwei oder mehr Ausgabeinformationen (O) präsentieren soll, wobei die Auswahl für jede der zwei oder mehr Ausgabeinformationen (O) zumindest basierend auf der Beziehung zwischen den zwei oder mehr Klassifizierungsinformationen (C), die den zwei oder mehr Ausgabeinformationen (O) entsprechen, und einer Fahrererkennungszeit getroffen wird, wobei die Fahrererkennungszeit eine Zeit ist, die von dem Zeitpunkt, zu dem jedes der Informationspräsentationselemente (401, 402) damit beginnt, die Ausgabeinformation (O) zu präsentieren, bis zu dem Zeitpunkt gemessen wird, zu dem der Fahrer die Ausgabeinformation (O) erkennt.

5. Die Informationspräsentationsunterstützungsvorrichtung (20) für ein Spreizsitzfahrzeug (1) gemäß Anspruch 4,
wobei die Informationspräsentationsunterstützungsvorrichtung (20) für ein Spreizsitzfahrzeug (1) ferner einen Antriebszustandsinformationen-Erfassungsabschnitt (21) aufweist, der dazu konfiguriert ist, Antriebszustandsinformationen zu erfassen, die sich auf einen Antriebszustand des Spreizsitzfahrzeugs (1) beziehen, das durch den Fahrer gefahren wird, wobei
der Auswahlabschnitt (20d, 200d) dazu konfiguriert ist, zumindest ein Informationspräsentationselement (401, 402) auszuwählen, das jede der zwei oder mehr Ausgabeinformationen (O) präsentieren soll, wobei die Auswahl für jede der zwei oder mehr Ausgabeinformationen (O) zumindest basierend auf der Beziehung zwischen den zwei oder mehr Klassifizierungsinformationen (C), die den zwei oder mehr Ausgabeinformationen (O) entsprechen, der Fahrererkennungszeit und den Antriebszustandsinformationen getroffen wird, die durch den Antriebszustandsinformationen-Erfassungsabschnitt (21) erfasst werden.

6. Die Informationspräsentationsunterstützungsvorrichtung (20) für ein Spreizsitzfahrzeug (1) gemäß einem der Ansprüche 1 bis 3,
wobei die Informationspräsentationsunterstützungsvorrichtung (20) für ein Spreizsitzfahrzeug (1) ferner einen Antriebszustandsinformationen-Erfassungsabschnitt (21) aufweist, der dazu konfiguriert ist, Antriebszustandsinformationen zu erfassen, die sich auf einen Antriebszustand des Spreizsitzfahrzeugs (1) beziehen, das durch den Fahrer gefahren wird, wobei
der Auswahlabschnitt (20d, 200d) dazu konfiguriert ist, zumindest ein Informationspräsentationselement (401, 402) auszuwählen, das jede der zwei oder mehr Ausgabeinformationen (O) präsentieren soll, wobei die Auswahl für jede der zwei oder mehr Ausgabeinformationen (O) zumindest basierend auf der Beziehung zwischen den zwei oder mehr Klassifizierungsinformationen (C), die den zwei oder mehr Ausgabeinformationen (O) entsprechen, und den Antriebszustandsinformationen getroffen wird, die durch den Antriebszustandsinformationen-Erfassungsabschnitt (21) erfasst werden.

7. Die Informationspräsentationsunterstützungsvorrichtung (20) für ein Spreizsitzfahrzeug (1) gemäß einem der Ansprüche 1 bis 6, bei dem
die zwei oder mehr Informationspräsentationselemente (401, 402) zumindest zwei Anzeigeteile umfassen, die Ausgabeinformationen (O) an unterschiedlichen Anzeigepositionen zueinander anzeigen.

8. Die Informationspräsentationsunterstützungsvorrichtung (20) für ein Spreizsitzfahrzeug (1) gemäß einem der Ansprüche 1 bis 7,
wobei die Informationspräsentationsunterstützungsvorrichtung (20) für ein Spreizsitzfahrzeug (1) ferner folgende Merkmale aufweist:
einen Ausgabeinformationen-Erfassungsabschnitt (20a, 20a', 200a), der dazu konfiguriert ist, die Ausgabeinformationen (O) zu erfassen; und
einen Informationspräsentationssteuerabschnitt (20f, 20f`, 20f-2, 20f'-2), der dazu konfiguriert ist, zu bewirken, dass jede der zwei oder mehr Ausgabeinformationen (O) über das Informationspräsentationselement (401, 402) präsentiert wird, das durch den Auswahlabschnitt (20d, 200d) ausgewählt wird, basierend auf dem Präsentationsbefehl, der von dem Präsentationsbefehl-Ausgabeabschnitt (20e, 200e) gegeben wird.

9. Ein Informationspräsentationssystem für ein Spreizsitzfahrzeug (1),
wobei das Informationspräsentationssystem für ein Spreizsitzfahrzeug (1) folgende Merkmale umfasst:
die Informationspräsentationsunterstützungsvorrichtung (20) für ein Spreizsitzfahrzeug (1) gemäß Anspruch 8, die in dem Spreizsitzfahrzeug (1) vorgesehen ist; und
die zwei oder mehr Informationspräsentationselemente (401, 402), die in dem Spreizsitzfahrzeug (1) oder in dem Zusatzgerät (302, 303) vorgesehen sind.

10. Ein Informationspräsentationssystem für ein Spreizsitzfahrzeug (1),
wobei das Informationspräsentationssystem für ein Spreizsitzfahrzeug (1) folgende Merkmale umfasst:
die Informationspräsentationsunterstützungsvorrichtung (20) für ein Spreizsitzfahrzeug (1) gemäß einem der Ansprüche 1 bis 7, die an einer Position vorgesehen ist, die sich weder in dem Spreizsitzfahrzeug (1) noch in dem Zusatzgerät (302, 303) befindet;
einen Informationspräsentationssteuerabschnitt (20f, 20f', 20f-2, 20f'-2), der in dem Spreizsitzfahrzeug (1) oder dem Zusatzgerät (302, 303) vorgesehen ist, wobei der Informationspräsentationssteuerabschnitt (20f, 20f', 20f-2, 20f'-2) bewirkt, dass jede der zwei oder mehr Ausgabeinformationen (O) über das Informationspräsentationselement (401, 402) präsentiert wird, das durch den Auswahlabschnitt (20d, 200d) ausgewählt wird, basierend auf dem Präsentationsbefehl, der von dem Präsentationsbefehl-Ausgabeabschnitt (20e, 200e) gegeben wird; und
die zwei oder mehr Informationspräsentationselemente (401, 402), die in dem Spreizsitzfahrzeug (1) oder in dem Zusatzgerät (302, 303) vorgesehen sind.

## Revendications

1. Dispositif d'aide à la présentation d'informations (20) pour un véhicule à selle (1),
le dispositif d'aide à la présentation d'informations (20) pour un véhicule à selle (1) comprenant:
un segment d'acquisition d'informations d'éléments de présentation (20c, 20c', 200c) effectifs configuré pour acquérir les éléments d'information d'éléments de présentation effectifs relatifs à deux ou plusieurs éléments de présentation d'informations (401, 402) qui sont prévus dans le véhicule à selle (1) ou dans un accessoire (302, 303) appartenant à un conducteur du véhicule à selle (1) et qui se trouve dans un état disponible;
un segment d'acquisition d'informations de classification (20b, 200b) configuré pour acquérir les éléments d'information de classification (C) relatifs aux types d'informations de sortie (O);
**caractérisé par**
un segment de sélection (20d, 200d) qui est configuré pour sélectionner, en cas de présentation des deux ou plusieurs éléments d'information de sortie (O) de manière venant en chevauchement dans le temps, au moins un élément de présentation d'informations (401, 402) qui doit présenter chacun des deux ou plusieurs éléments d'information de sortie (O) parmi les deux ou plusieurs éléments de présentation d'informations (401, 402) qui se trouve dans l'état disponible, la sélection étant réalisée au moins sur base d'un rapport entre les deux ou plusieurs éléments d'information de classification (C) correspondant aux deux ou plusieurs éléments d'information de sortie (O); et
un segment de sortie de commande de présentation (20e, 200e) configuré pour sortir une commande de présentation pour amener chacun des deux ou plusieurs éléments d'information de sortie (O) à être présenté par l'intermédiaire de l'élément de présentation d'informations (401, 402) sélectionné par le segment de sélection (20d, 200d).

2. Dispositif d'aide à la présentation d'informations (20) pour véhicule à selle (1) selon la revendication 1,
le dispositif d'aide à la présentation d'informations (20) pour un véhicule à selle (1) comprenant par ailleurs un premier segment de mémorisation de données (22) qui mémorise les premières données indiquant un rapport de correspondance entre les éléments d'information de classification (C) et les premiers paramètres qui sont définis pour les éléments d'information de classification (C) respectifs,
dans lequel
le segment de sélection (20d, 200d) est configuré pour spécifier le rapport parmi les deux ou plusieurs éléments d'information de classification (C) en comparant entre eux les premiers paramètres réglés pour les éléments d'information de classification (C) respectifs.

3. Dispositif d'aide à la présentation d'informations (20) pour véhicule à selle (1) selon la revendication 1 ou 2,
le dispositif d'aide à la présentation d'informations (20) pour un véhicule à selle (1) comprenant par ailleurs un deuxième segment de mémorisation de données (22) qui mémorise les deuxièmes données indiquant un rapport de correspondance entre les éléments de présentation d'informations (401, 402) et les deuxièmes paramètres qui sont réglés pour les éléments de présentation d'informations (401, 402) respectifs,
dans lequel
le segment de sélection (20d, 200d) est configuré pour sélectionner au moins un élément de présentation d'informations (401, 402) qui doit présenter chacun des deux ou plusieurs éléments d'information de sortie (O), au moins sur base du rapport entre les deux ou plusieurs éléments d'information de classification (C) correspondant aux deux ou plusieurs éléments d'information de sortie (O) et au deuxième paramètre.

4. Dispositif d'aide à la présentation d'informations (20) pour véhicule à selle (1) selon l'une quelconque des revendications 1 à 3, dans lequel
le segment de sélection (20d, 200d) est configuré pour sélectionner au moins un élément de présentation d'informations (401, 402) qui doit présenter chacun des deux ou plusieurs éléments d'information de sortie (O), la sélection étant réalisée pour chacun des deux ou plusieurs éléments d'information de sortie (O) au moins sur base du rapport entre les deux ou plusieurs éléments d'information de classification (C) correspondant aux deux ou plusieurs éléments d'information de sortie (O) et un temps de reconnaissance de conducteur, le temps de reconnaissance de conducteur étant un temps écoulé entre le moment où chacun des éléments de présentation d'informations (401, 402) commence à présenter l'élément d'information de sortie (O) et le moment où le conducteur reconnaît l'élément d'information de sortie (O).

5. Dispositif d'aide à la présentation d'informations (20) pour véhicule à selle (1) selon la revendication 4,
le dispositif d'aide à la présentation d'informations (20) pour un véhicule à selle (1) comprenant par ailleurs un segment d'acquisition d'informations d'état de conduite (21) configuré pour acquérir les informations d'état de conduite relatives à un état de conduite du véhicule à selle (1) conduit par le conducteur,
dans lequel
le segment de sélection (20d, 200d) est configuré pour sélectionner au moins un élément de présentation d'informations (401, 402) qui doit présenter chacun des deux ou plusieurs éléments d'information de sortie (O), la sélection étant réalisée pour chacun des deux ou plusieurs éléments d'information de sortie (O) au moins sur base du rapport entre les deux ou plusieurs éléments d'information de classification (C) correspondant aux deux ou plusieurs éléments d'information de sortie (O), le temps de reconnaissance du conducteur et les informations d'état de conduite acquises par le segment d'acquisition d'informations d'état de conduite (21).

6. Dispositif d'aide à la présentation d'informations (20) pour véhicule à selle (1) selon l'une quelconque des revendications 1 à 3,
le dispositif d'aide à la présentation d'informations (20) pour un véhicule à selle (1) comprenant par ailleurs un segment d'acquisition d'informations d'état de conduite (21) configuré pour acquérir les informations d'état de conduite relatives à un état de conduite du véhicule à selle (1) conduit par le conducteur,
dans lequel
le segment de sélection (20d, 200d) est configuré pour sélectionner au moins un élément de présentation d'informations (401, 402) qui doit présenter chacun des deux ou plusieurs éléments d'information de sortie (O), la sélection étant réalisée pour chacun des deux ou plusieurs éléments d'information de sortie (O) au moins sur base du rapport entre les deux ou plusieurs éléments d'information de classification (C) correspondant aux deux ou plusieurs éléments d'information de sortie (O) et les informations d'état de conduite acquises par le segment d'acquisition d'informations d'état de conduite (21).

7. Dispositif d'aide à la présentation d'informations (20) pour véhicule à selle (1) selon l'une quelconque des revendications 1 à 6, dans lequel
les deux ou plusieurs éléments de présentation d'informations (401, 402) comportent au moins deux parties d'affichage qui affichent les éléments d'information de sortie (O) à des positions d'affichage différentes l'une par rapport à l'autre.

8. Dispositif d'aide à la présentation d'informations (20) pour véhicule à selle (1) selon l'une quelconque des revendications 1 à 7,
le dispositif d'aide à la présentation d'informations (20) pour un véhicule à selle (1) comprenant par ailleurs:
un segment d'acquisition d'informations de sortie (20a, 20a', 200a) configuré pour acquérir les éléments d'information de sortie (O); et
un segment de commande de présentation d'informations (20f, 20f, 20f-2, 20f'-2) configuré pour amener chacun des deux ou plusieurs éléments d'information de sortie (O) à être présenté par l'intermédiaire de l'élément de présentation d'informations (401, 402) sélectionné par le segment de sélection (20d, 200d), sur base de la commande de présentation donnée par le segment de sortie de commande de présentation (20e, 200e).

9. Système de présentation d'informations pour véhicule à selle (1),
le système de présentation d'informations pour un véhicule à selle (1) comportant:
le dispositif d'aide à la présentation d'informations (20) pour un véhicule à selle (1) selon la revendication 8, prévu dans le véhicule à selle (1); et
les deux ou plusieurs éléments de présentation d'informations (401, 402) prévus dans le véhicule à selle (1) ou dans l'accessoire (302, 303).

10. Système de présentation d'informations pour un véhicule à selle (1),
le système de présentation d'informations pour un véhicule à selle (1) comportant:
le dispositif d'aide à la présentation d'informations (20) pour un véhicule à selle (1) selon l'une quelconque des revendications 1 à 7, prévu à une position ni dans le véhicule à selle (1), ni dans l'accessoire (302, 303);
un segment de commande de présentation d'informations (20f, 20f', 20f-2, 20f'-2) prévu dans le véhicule à selle (1) ou dans l'accessoire (302, 303), le segment de commande de présentation d'informations (20f, 20f', 20f-2, 20f'-2) amenant chacun des deux ou plusieurs éléments d'information de sortie (4) à être présenté par l'intermédiaire de l'élément de présentation d'informations (401, 402) sélectionné par le segment de sélection (20d, 200d) sur base de la commande de présentation donnée à partir du segment de sortie de commande de présentation (20e, 200e); et
les deux ou plusieurs éléments de présentation d'informations (401, 402) prévus dans le véhicule à selle (1) ou dans l'accessoire (302, 303).
